# EUROPÄISCHE PATENTSCHRIFT

(11) **EP 4 101 349 B1**
(45) Veröffentlichungstag und Bekanntmachung des Hinweises auf die Patenterteilung: **23.08.2023**
(21) Anmeldenummer: 21186946.6
(22) Anmeldetag: 21.07.2021
(51) Int. Cl.: A47J 17/18, A23N 7/02, A47J 44/00

(54) **VERFAHREN ZUM KARTOFFELSCHÄLEN UND KÜCHENMASCHINE**
METHOD FOR POTATO PEELING AND KITCHEN APPLIANCE
PROCÉDÉ D'ÉPLUCHAGE DE POMMES DE TERRE ET ROBOT DE CUISINE

(43) Veröffentlichungstag der Anmeldung: 14.12.2022
(73) Patentinhaber: Vorwerk & Co. Interholding GmbH, 42270 Wuppertal (DE)
(72) Erfinder: THIELE, Tobias, 42477 Radevormwald (DE); STOLZE, Svenja, 41517 Grevenbroich (DE); MERTA, Andreas, 42489 Wülfrath (DE); HEYNEN, Andreas, 42477 Radevormwald (DE); THIES, Felix, 42115 Wuppertal (DE); SICKERT, Michael, 58256 Ennepetal (DE); SCHMITZ, Kevin, 40599 Düsseldorf (DE); JANSEN, Sebastian, 44803 Bochum (DE); IRNICH, Lukas, 52393 Hürtgenwald (DE); BECKER, Malte, 52072 Aachen (DE); KLODT, Maximilian, 52064 Aachen (DE); MÜLLER-TÖNISSEN, Lars, 52064 Aachen (DE)
(74) Vertreter: Gille Hrabal Partnerschaftsgesellschaft mbB Patentanwälte

(56) Entgegenhaltungen:
- EP-A1- 3 590 393
- WO-A1-01/34007
- WO-A1-2016/168889
- US-A- 4 998 467
- US-A1- 2010 212 519

## Beschreibung

Die Erfindung betrifft ein Verfahren zum Schälen von Kartoffeln sowie eine Küchenmaschine.

Es gibt Kartoffelschälmaschinen, die Drehscheiben mit einer abrasiven Oberfläche in Rotation versetzen, um Kartoffeln zu schälen. Zu den bekannten Kartoffelschälmaschinen gehören beispielsweise die Geräte Kenwood Chef AT444 und Melissa 16220007.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

EP 3 590 393 A1 offenbart eine Küchenmaschine, die zur Speisenzubereitung ein Speisenzubereitungsgefäß, ein Heizelement zum Erhitzen einer Speise in dem Speisenzubereitungsgefäß und ein drehbares Werkzeug zum Mischen oder Zerkleinern der Speise in dem Speisenzubereitungsgefäß umfasst, das ein motorisiertes Drehen in eine erste Rotationsrichtung erlaubt.

Es ist Aufgabe der Erfindung, ein weiterentwickeltes Verfahren zum Schälen von Kartoffeln sowie eine weiterentwickelte Küchenmaschine bereitzustellen.

Zur Lösung der Aufgabe dienen ein Verfahren gemäß dem Hauptanspruch sowie eine Küchenmaschine gemäß dem Nebenanspruch. Vorteilhafte Ausführungsformen ergeben sich aus den Unteransprüchen.

Zur Lösung der Aufgabe dient ein Verfahren zum Schälen von Kartoffeln mit einer Küchenmaschine, die zur Speisenzubereitung ein abnehmbares Speisenzubereitungsgefäß, ein Heizelement zum Erhitzen einer Speise in dem Speisenzubereitungsgefäß und ein drehbares Werkzeug zum Mischen oder Zerkleinern der Speise in dem Speisenzubereitungsgefäß umfasst, mit folgenden Schritten:
- Aufstecken einer Kartoffelschälscheibe, die eine abrasive Struktur auf dessen Oberfläche hat, von oben auf das Werkzeug, das sich zentral an einem Boden des Speisenzubereitungsgefäßes befindet, zum Herstellen einer manuell lösbaren, rotatorisch gekoppelten Verbindung, so dass sich im Betrieb die Kartoffelschälscheibe mit dergleichen Drehgeschwindigkeit dreht wie das Werkzeug;
- Hinzugeben von Kartoffeln in das Speisenzubereitungsgefäßes von oben auf die Kartoffelschälscheibe;
- motorisiertes Drehen des Werkzeugs in eine erste Rotationsrichtung und Schälen der Kartoffeln mit der Kartoffelschälscheibe innerhalb des Speisenzubereitungsgefäßes.

Durch das Verfahren wird ermöglicht, dass eine Küchenmaschine, die zum Zubereiten einer Speise in einem Speisenzubereitungsgefäß mithilfe von Erhitzen und Zerkleinern oder Mischen vorgesehen ist, zusätzlich auch zum Schälen von Kartoffeln verwendet werden kann. Durch das Aufstecken einer Kartoffelschälscheibe von oben auf das rotierbare Werkzeug der Küchenmaschine wird der bestehende Antrieb der Küchenmaschine benutzt, um die Kartoffelschälscheibe für ein Schälen von Kartoffeln anzutreiben. Der Benutzer benötigt folglich keine Spezialmaschine zum Kartoffelschälen mehr und braucht auch keine aufwändige Umrüstung einer bestehenden Küchenmaschine vornehmen.

Motorisiertes Drehen des Werkzeugs bedeutet, dass die Küchenmaschine den Antrieb veranlasst, das Werkzeug zu drehen. Das Werkzeug wird insbesondere durch eine Welle des Antriebs angetrieben, die sich mittig und im rechten Winkel durch den Boden des Speisenzubereitungsgefäßes erstreckt.

In einer Ausführungsform ist folgender, zusätzlicher Verfahrensschritt vorgesehen: motorisiertes Drehen des Werkzeugs mit der aufgesteckten Kartoffelschälscheibe in eine entgegengesetzte zweite Rotationsrichtung. Dies ermöglicht Zweierlei. Erstens können mit der aufgesteckten Kartoffelschälscheibe auch andere Bearbeitungsvorgänge, die kein Schälen beinhalten, ohne ein Lösen und Entfernen der Kartoffelschälscheibe aus dem Speisenzubereitungsgefäß durchgeführt werden. Die abrasive Struktur kann entsprechend ausgestaltet sein, dass diese nur in der ersten Rotationsrichtung abrasiv wirkt. Zweitens können unabhängig von der Ausgestaltung der abrasiven Struktur die Kartoffeln verbessert durchmischt werden, so dass ein verbessertes Schälergebnis erzielt werden kann.

In einer Ausführungsform ist vorgesehen, dass mehrfach zwischen der ersten Rotationsrichtung und zweiten Rotationsrichtung gewechselt wird, vorzugsweise in einem regelmäßigen Intervall. Ein Schälen und Reinigen kann auf diese Weise in einem Vorgang erfolgen.

In einer Ausführungsform weist die Küchenmaschine einen Kartoffelschäl-Modus auf und bei einer Aktivierung des Kartoffelschäl-Modus veranlasst die Küchenmaschine, dass das Werkzeug mit einer vordefinierten Drehgeschwindigkeit in die erste Rotationsrichtung gedreht wird und/oder mit einer weiteren, vorzugsweise unterschiedlichen, vordefinierten Drehgeschwindigkeit in die zweite Rotationsrichtung. Eine fest vordefinierte Drehgeschwindigkeit für die erste und/oder zweite Rotationsrichtung erlaubt ein besonders zuverlässiges Erzielen eines reproduzierbaren Schälergebnisses. Benutzerfehler werden vermieden. durch eine Steuerungseinrichtung der Küchenmaschine angesteuert. Eine Küchenmaschine veranlasst ein Werkzeug zu drehen, indem insbesondere eine Steuerungseinrichtung der Küchenmaschine einen Antrieb für das Werkzeug entsprechend ansteuert. Eine vordefinierte Drehgeschwindigkeit ist ein Wert einer Soll-Drehgeschwindigkeit, der in einem Speicher der Steuerungseinrichtung gespeichert worden ist.

Die nachfolgenden Ausführungsformen betreffen ein Ermitteln der Schäldauer in die erste Rotationsrichtung durch die Küchenmaschine.

Während Kartoffelschäl-Spezialmaschinen generell einen sehr großen Durchmesser aufweisen, um in einer Umdrehung einer Schälscheibe eine möglichst große Fläche von Kartoffeln zu schälen, ist der Bodendurchmesser einer Küchenmaschine relativ klein, häufig nur halb so groß oder weniger im Vergleich zu Kartoffelschäl-Spezialmaschinen.

Um dennoch eine für den Benutzer akzeptable Gesamtschäldauer zum Schälen von Kartoffeln in einer Küchenmaschine mit einem akzeptablen oder sogar guten Schälergebnis ermöglichen zu können, ist die Schälgeschwindigkeit zu erhöhen, allerdings ohne übermäßigen Verschnitt.

Ein gutes Schälergebnis bemisst sich durch wenig oder gar keine Schalenreste an einer geschälten Kartoffel trotz möglichst geringem Verschnitt und einer möglichst kurzen Schäldauer.

In einer Ausgestaltung ermittelt die Küchenmaschine ein Gewicht der Kartoffeln in dem Speisenzubereitungsgefäß oder gibt dem Benutzer ein einzufüllendes Kartoffelgewicht über die Benutzerschnittstelle vor. Ein Ermitteln des Gewichts durch die Küchenmaschine erfolgt bevorzugt mithilfe mindestens einen, vorzugsweise drei, in der Küchenmaschine integrierten Gewichtssensor. Die Küchenmaschine ermittelt anschließend eine Schäldauer in Abhängigkeit von dem vorgegebenen oder ermittelten Gewicht, wobei das Werkzeug für die Schäldauer in die erste Rotationsrichtung gedreht wird. Ein verbessertes, reproduzierbares Schälergebnis kann so erhalten werden. In einer Ausgestaltung umfasst die Küchenmaschine, insbesondere der mit der Steuerungseinrichtung verbundene Speicher, mindestens zwei vordefinierte Wertepaare, wobei das erste Wertepaar eine erste Schäldauer für ein erstes Gewicht und das zweite Wertepaar eine zweite Schäldauer für ein zweites Gewicht umfasst. Die Küchenmaschine, insbesondere die Steuerungseinrichtung, ermittelt die Schäldauer in die erste Rotationsrichtung, indem anhand des Gewichts der Kartoffeln in dem Speisenzubereitungsgefäß eine Schäldauer anhand der beiden vordefinierten Wertepaar linear interpoliert wird.

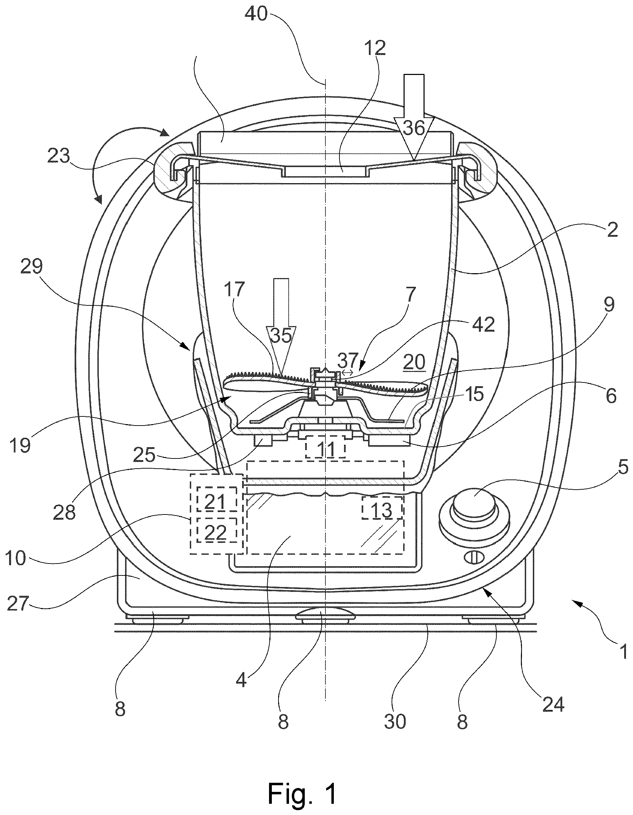

In einer Ausführungsform ermittelt die Küchenmaschine die Schäldauer in Abhängigkeit von dem Gewicht und/oder der Kartoffelgröße, und das Werkzeug wird für die Schäldauer in die erste Rotationsrichtung gedreht wird. Mit Kartoffelgröße ist bevorzugt eine ungefähr durchschnittliche Größe der Kartoffeln oder Kartoffelstücke in dem Speisenzubereitungsgefäß gemeint. Eine Größe der Kartoffeln kann durch eine maximale, räumliche Ausdehnung in einer beliebigen Achse beschrieben werden. Falls die Kartoffelgröße nicht vom Benutzer eingegeben wird, ist in einer Ausgestaltung vorgesehen, eine maximale Ausdehnung als Maß für die Kartoffelgröße zugrunde zu legen und/oder den Durchmesser der Deckelöffnung (in Fig. 1, Bezugszeichen 12) des Deckels des Speisenzubereitungsgefäßes mit der Kartoffelgröße gleichzusetzen. Eine hinreichende Abschätzung ohne zusätzliche Prozessorbelastung für eine gesonderte Ermittlung der Kartoffelgröße kann so erreicht werden.

In einer Ausgestaltung umfasst die Küchenmaschine mindestens zwei vordefinierte Wertepaare, wobei das erste Wertepaar eine erste Schäldauer für ein erstes Gewicht und/oder eine erste Kartoffelgröße und das zweite Wertepaar eine zweite Schäldauer für ein zweites Gewicht und/oder eine zweite Kartoffelgröße umfasst. Die Küchenmaschine, insbesondere die Steuerungseinrichtung, ermittelt die Schäldauer in die erste Rotationsrichtung durch lineare Interpolation auf Basis der beiden vordefinierten Wertepaare. Anders ausgedrückt ermittelt die Küchenmaschine die Schäldauer in die erste Rotationsrichtung, indem anhand des Gewichts der Kartoffeln in dem Speisenzubereitungsgefäß eine Schäldauer anhand der beiden vordefinierten Wertepaar linear interpoliert wird.

Maßgeblich für die vorgenannten Ausführungsformen ist die Erkenntnis, dass eine lineare Interpolation anhand von zwei Wertepaaren ausreichend präzise ist, um beim Kartoffelschälen mittels einer Kartoffelschälscheibe, die auf das Werkzeug der Küchenmaschine aufgesteckt ist, ein hinreichendes, reproduzierbares Schälergebnis erzielen zu können. Die Komplexität der Ermittlung und folglich die Belastung des Prozessors und des Speichers der Steuerungseinrichtung können so reduziert werden.

In einer Ausführungsform sind folgende Schritte vorgesehen:
- eine Steuerungseinrichtung greift auf mindestens einen Wert zu, der zu einem Gewicht und/oder einer Kartoffelgröße der Kartoffeln in dem Speisenzubereitungsgefäß korrespondiert;
- die Steuerungseinrichtung greift auf mehrere vordefinierte Wertepaare zu, die für spezielle Werte des Gewichts, der Kartoffelgröße und/oder der Drehgeschwindigkeit eine Schäldauer angeben;
- die Steuerungseinrichtung erhält eine Benutzereingabe für die Drehgeschwindigkeit in die erste Rotationsrichtung, z.B. über eine Benutzerschnittstelle, oder ermittelt die Drehgeschwindigkeit anhand des Gewichts und/oder der Kartoffelgröße, vorzugsweise mithilfe von Formeln oder einem Look-up-Table, so dass bestimmten Bereichen der Eingangsgröße (Gewicht und/oder Kartoffelgröße) eine vordefinierte Ausgangsgröße (Drehgeschwindigkeit) zugeordnet wird;
- die Steuerungseinrichtung führt anhand des Gewichts und/oder der Kartoffelgröße eine lineare Interpolation auf Basis der vordefinierten Wertepaare für die Drehgeschwindigkeit in die erste Rotationsrichtung durch, um die Schäldauer zu ermitteln; und/oder
- die Steuerungseinrichtung veranlasst einen Antrieb der Küchenmaschine, das Werkzeug mit der Drehgeschwindigkeit für die Schäldauer in die erste Rotationsrichtung zu drehen.
   Durch das Anpassen der Drehgeschwindigkeit an die Kartoffeln im Speisenzubereitungsgefäß wird das Schälergebnis weiter verbessert.

In einer Ausführungsform beträgt die Drehgeschwindigkeit für die erste Rotationsrichtung mindestens 450 U/min und/oder höchstens 1200 U/min. Ein verbessertes Schälergebnis kann so zuverlässig erzielt werden.

In einer Ausführungsform wird zum Schälen von Kartoffeln das Werkzeug mit ungefähr 500 U/min oder ungefähr 800 U/min oder ungefähr 1100 U/min in die erste Rotationsrichtung gedreht. Insbesondere entsprechen diese Werte der vordefinierten Drehgeschwindigkeit für die erste Rotationsrichtung. Ein verbessertes Schälergebnis kann so zuverlässig erzielt werden. Mit ungefähr ist eine Abweichung von 10% gemeint. Durch 800 U/min wird bereits eine signifikante Reduzierung der Gesamtschälzeit ermöglicht. Durch 1100 U/min wird bei einer Nutzung einer Küchenmaschine zum Schälen von Kartoffeln die Schaumbildung reduziert, besonders in Verbindung mit der Zugabe von Speiseöl. Anders als bei einer Spezial-Kartoffelschälmaschine dreht sich bei einer Küchenmaschine das Werkzeug zum Mischen und/oder zerkleinern mit, so dass bei einem Schälvorgang im Wasserbad in Abhängigkeit von der Drehgeschwindigkeit unterschiedlich starke Aufwärtsströmungen des Wassers im Speisenzubereitungsgefäß entstehen, was Einfluss auf die oben beschriebenen Wirkungen hat.

In einer Ausgestaltung wird für mindestens 3 Minuten und/oder höchstens 9 Minuten das Werkzeug in die erste Rotationsrichtung gedreht, um die Kartoffeln in dem Speisenzubereitungsgefäß zu schälen.

In einer Ausgestaltung wird zum Schälen von insbesondere 650g Kartoffeln das Werkzeug für ungefähr 7 Minuten bei ungefähr 500 U/min gedreht wird oder für ungefähr 4 Minuten bei ungefähr 1100 U/min gedreht, wobei für dazwischen liegenden Drehgeschwindigkeiten für eine Schäldauer gedreht wird, die entsprechend linear interpoliert wird.

In einer Ausführungsform erfolgt das motorisierte Drehen des Werkzeugs und damit die Kartoffelschälscheibe zum Schälen der Kartoffeln durch die Kartoffelschälscheibe innerhalb des Speisenzubereitungsgefäßes zunächst mit einer ersten Drehzahl für eine erst Schäldauer, und anschließend wird das Werkzeug und damit die Kartoffelschälscheibe zum Schälen der Kartoffeln innerhalb des Speisenzubereitungsgefäßes mit einer zweiten Drehzahl für eine zweite Schäldauer motorisiert gedreht. Die zweite Drehzahl unterscheidet sich dabei von der ersten Drehzahl. Insbesondere ist die zweite Drehzahl niedriger ist als die erste Drehzahl. Drehzahl und Drehgeschwindigkeit bedeuten ein und dasselbe. Vorzugsweise ist die zweite Schäldauer länger als die erste Schäldauer, um Verschnitt zu reduzieren.

Kartoffeln können auf diese Weise mit einer Küchenmaschine unter Zuhilfenahme einer Kartoffelschälscheibe besonders effizient geschält werden. Dieser Ausführungsform liegt die Erkenntnis zugrunde, dass mit einer (zunächst) hohen Drehzahl Überstände an den Kartoffeln abgetragen werden. Mit der (anschließenden) niedrigeren Drehzahl können die Oberflächen der Kartoffeln schneller gleichmäßig ohne viel Verschnitt abgetragen werden. Die Gesamtschälzeit kann auf diese Weise insgesamt bei geringem Verschnitt reduziert werden.

Insbesondere ist die erste Drehzahl größer als 700 U/min, bevorzugt größer oder gleich 1100 U/min, und/oder höchstens 1250 U/min. Grundsätzlich möglich, wenn auch im Hinblick auf den Verschnitt nicht optimal, ist eine erste Drehzahl oder Drehgeschwindigkeit in die erste Rotationsrichtung von höchstens 2000 U/min. Insbesondere beträgt die erste Schäldauer mindestens 30 Sekunden und/oder höchstens 120 Sekunden beträgt. Überstände der Kartoffeln können so effektiv abgetragen werden. Insbesondere sind 30 Sekunden bevorzugt bei 200g und/oder 120 Sekunden bevorzugt bei 1100g Gewicht der Kartoffeln in dem Speisenzubereitungsgefäß.

Insbesondere ist die zweite Drehzahl größer als 350 U/min, bevorzugt größer oder gleich 500 U/min, und/oder höchstens 600 U/min. Ein besonders gleichmäßiges Schälergebnis bei geringem Verschnitt kann so erzielt werden. Vorzugsweise beträgt die zweite Schäldauer mindestens 150 Sekunden und/oder höchstens 240 Sekunden. Insbesondere beträgt der Quotient aus der zweiten Schäldauer und einem Durchmesser der Kartoffelschälscheibe mindestens 1 Sekunde / Millimeter und/oder höchstens 2 Sekunden / Millimeter. Ein gleichmäßiges Schälergebnis mit geringem Verschnitt kann so erzielt werden. Beispielsweise ist bei 200g Gewicht der Kartoffeln ein Quotient von 150 s / 148 mm bevorzugt, wobei 148 mm ein bevorzugter Durchmesser der Kartoffelschälscheibe ist. Beispielsweise ist bei 1100g Gewicht ein Quotient von 240 s / 148 mm bevorzugt. Da Spezial-Kartoffelschälmaschinen üblicherweise einen sehr großen Boden-Durchmesser aufweisen, der häufig doppelt so groß ist wie bei einer Küchenmaschine, ist die Schäldauer spezifisch zur Schälfläche zu betrachten, die proportional zum Durchmesser ist. Insbesondere ist die Steuerungseinrichtung so eingerichtet, dass die Küchenmaschine dazu veranlasst wird, das Werkzeug mit der ersten Drehzahl für die erste Schäldauer und mit der zweiten Drehzahl für die zweite Schäldauer zu drehen.

In einer Ausgestaltung wird vor dem Schälen von Kartoffeln Wasser in das Speisenzubereitungsgefäß geben, mindestens zum Eintauchen der gesamten Kartoffelschälscheibe und/oder höchstens bis 5 cm oberhalb des obersten Punktes des Werkzeugs zum Mischen oder Zerkleinern der Küchenmaschine.

In eine Ausgestaltung erfolgt nach dem Drehen des Werkzeugs in die erste Rotationsrichtung ein motorisiertes Drehen des Werkzeugs und damit gleichzeitig der Kartoffelschälscheibe in die entgegengesetzte zweite Rotationsrichtung, wobei die abrasive Struktur an der Oberfläche der Kartoffelschälscheibe derart beschaffen ist, dass bei einem Drehen in die erste Rotationsrichtung Kartoffeln geschält werden und bei einem Drehen in die zweite Rotationsrichtung eine aufgeraute Kartoffeloberfläche glättet wird, die durch das vorherige Schälen aufgeraut worden war. Ein Glätten, auch Polieren genannt, der Oberfläche der Kartoffel kann so ermöglicht werden.

In einer Ausgestaltung beträgt die Zeitdauer des Drehens in die zweite Rotationsrichtung mindestens 10 Sekunden und/oder höchstens 60 Sekunden. Ein gleichmäßiges Glätten einer aufgerauten Kartoffeloberfläche kann so sichergestellt werden. Insbesondere ist die Steuerungseinrichtung so eingerichtet, dass die Küchenmaschine dazu veranlasst wird, das Werkzeug mit der ersten Drehzahl oder der vordefinierten Drehgeschwindigkeit für die Schäldauer und mit der zweiten Drehzahl für die Zeitdauer für ein Glätten zu drehen.

Ein weiterer Aspekt der Erfindung betrifft eine Küchenmaschine zum Durchführen des Verfahrens gemäß dem oben beschriebenen Aspekt der Erfindung. Die Küchenmaschine umfasst zur Speisenzubereitung ein abnehmbares Speisenzubereitungsgefäß, ein Heizelement zum Erhitzen einer Speise in dem Speisenzubereitungsgefäß, ein drehbares Werkzeug zum Mischen oder Zerkleinern der Speise in dem Speisenzubereitungsgefäß, das sich zentral an einem Boden des Speisenzubereitungsgefäßes befindet, und eine Kartoffelschälscheibe mit einer abrasiven Struktur auf dessen Oberfläche umfasst. Die Kartoffelschälscheibe kann oder ist von oben auf das Werkzeug aufgesteckt, derart, dass die Kartoffelschälscheibe manuell lösbaren und rotatorisch gekoppelt mit dem Werkzeug verbunden ist, so dass im Betrieb Kartoffeln in das Speisenzubereitungsgefäßes von oben auf die Kartoffelschälscheibe hinzugegeben werden können und sich die Kartoffelschälscheibe mit dergleichen Drehgeschwindigkeit dreht wie das Werkzeug, wenn das Werkzeug motorisiert in eine erste Rotationsrichtung zum Schälen der Kartoffeln mit der Kartoffelschälscheibe innerhalb des Speisenzubereitungsgefäßes gedreht wird. Die Vorteile, Definitionen und Ausgestaltungen des eingangs beschriebenen Aspektes der Erfindung kann auf diesen Aspekt der Erfindung übertragen werden.

In einer Ausführungsform hat die Kartoffelschälscheibe eine mittige Öffnung, die von einer mindestens 10 mm langen Innenkontur gebildet wird, die sich parallel zur Mittelachse erstreckt und nach dem Aufstecken auf das Werkzeug über mindestens 10 mm derart an einer Außenmantelfläche des Werkzeugs anliegt, dass bei einem Befüllen des Speisenzubereitungsgefäßes mit 800 g Kartoffeln die Kartoffelschälscheibe im Wesentlichen unverändert seine Position hält, also nicht z.B. seitlich wegkippt. Selbst eine Kartoffelschälscheibe mit einem Durchmesser von ca. 150 mm, deren horizontale Ausrichtung lediglich durch die lösbare Verbindung von der Innenkontur am Werkzeug gehalten wird, kann hierdurch der Belastung standhalten. Bevorzugt beträgt der Durchmesser der Öffnung mindestens 17 mm und/oder höchstens 19 mm. Insbesondere enthält die Innenkontur vorzugsweise mittels eines U-förmigen Freischnittes einen sich parallel zur Mittelachse erstreckenden Rastarm mit einer radal nach innen zur Mittelachse vorstehenden Rastnase. Beim Aufstecken wird der Rastarm nach außen radial verdrängt und damit verschwenkt, so dass die Rastnase entlang der Außenmantelfläche des Werkzeugs gleiten kann, bis die Rastnase in eine Ringnut der Außenmantelfläche des Werkzeugs einschnappt, wenn die vorgesehen Aufsteckposition erreicht ist. Wenn im Betrieb Wasser durch das drehende Werkzeug von unten nach oben gespült wird, bleibt die Kartoffelschälscheibe in der vorgesehen, axialen Aufsteckposition. Ein bevorzugt vorhandener Mitnehmer an der Unterseite der Kartoffelschälscheibe bleibt auf diese Weise zuverlässig mit dem Werkzeug, genauer gesagt mit einem der Radialarme des Werkzeugs, rotatorisch gekoppelt. Die Kartoffelschälscheibe kann sich daher stets zuverlässig mit dem Werkzeug mitdrehen.

In einer Ausführungsform umfasst die Küchenmaschine einen integrierten Gewichtssensor zum Ermitteln eines Gewichts der sich in dem Speisenzubereitungsgefäß befindlichen, zu schälenden Kartoffeln und/oder eine Steuerungseinrichtung ist so konfiguriert, dass eine Schäldauer für die erste Rotationsrichtung in Abhängigkeit von dem Gewicht ermittelt wird.

In einer Ausführungsform - oder in einem weiteren Aspekt der Erfindung betreffend eine Küchenmaschine mit einem Speisenzubereitungsgefäß, einem Heizelement, einem Werkzeug zum Mischen oder Zerkleinern und einer Kartoffelschälscheibe - ist die abrasive Struktur auf der Oberfläche der Kartoffelschälscheibe eine Struktur mit geometrisch unbestimmter Schneide. Insbesondere ist die abrasive Struktur durch ein Schleifmittel hergestellt. In einer Ausgestaltung ist die abrasive Struktur mit geometrisch unbestimmter Schneide mit einer Deckschicht versehen. Dies erleichtert die Reinigung. In einer Ausgestaltung ist die abrasive Struktur als eine separate Schicht vorgesehen, die auf der Oberfläche der Kartoffelschälscheibe befestigt und zerstörungsfrei gelöst werden kann. Dies erleichtert das Erneuern der abrasiven Struktur im Falle von Verschleiß. In einer Ausgestaltung ist die abrasive Struktur mit geometrisch unbestimmter Schneide in einer Weise auf der Oberfläche integriert und/oder in einer Weise durch die Deckschickt versehen, dass die abrasive Struktur in der ersten Rotationsrichtung Kartoffeln schälen und in der zweiten Rotationsrichtung nicht schälen, insbesondere glätten, kann. Die Deckschickt kann hierzu beispielsweise eine Vielzahl von Rampen bilden, die dazu führen, dass die abrasive Struktur in der zweiten Rotationsrichtung durch die Deckschickt geglättet ist und nur in der ersten Rotationsrichtung zu schälen vermag.

In einer Ausführungsform ist die abrasive Struktur auf der Oberfläche der Kartoffelschälscheibe eine Struktur mit geometrisch bestimmter Schneide. Insbesondere wird die abrasive Struktur durch eine Vielzahl von Vorsprüngen gebildet, von denen jeder Vorsprung sich über eine Fläche von mindestens 5 mm² und/oder höchstens 20 mm² auf der Oberfläche der Kartoffelschälscheibe erstreckt. Vorzugsweise sind die Vorsprünge voneinander beabstandet, vorzugsweise mindestens mit einem Abstand der einer hälfte der Ausdehnung eines Vorsprungs in die Richtung des Abstands entspricht. Besonders bevorzugt beträgt der Abstand in Umfangrichtung mindestens 1 mm und/oder höchstens 4 mm, besonders bevorzugt ungefähr 3 mm. Vorzugsweise sind die Seitenabstände ungefähr so groß wie die Abstände in Umfangrichtung und/oder mindestens 1 mm und/oder höchstens 4 mm, besonders bevorzugt ungefähr 3 mm. Insbesondere beträgt die maximale Höhe der Vorsprünge mindestens 0,5 mm und/oder höchstens 2 mm, besonders bevorzugt ungefähr 1 mm.

In einer bevorzugten Ausgestaltung sind die Vorsprünge Zähne, insbesondere mit einer Rampenform. Vorzugsweise haben die Zähne eine rechteckige Ausdehnung auf der Oberfläche.

Ein weiterer Aspekt der Erfindung betrifft ein Verfahren zum Zubereiten einer Speise mit einer Küchenmaschine in einem abnehmbaren Speisenzubereitungsgefäß mithilfe eines Heizelements zum Erhitzen einer Speise in dem Speisenzubereitungsgefäß und einem drehbaren Werkzeug zum Mischen oder Zerkleinern der Speise in dem Speisenzubereitungsgefäß, wobei das Verfahren folgende Schritte umfasst: manuelles Lösen einer Kartoffelschälscheibe, die zum Schälen von Kartoffeln auf ein Werkzeug zum Mischen oder Zerkleinern einer Küchenmaschine aufgesteckt worden war, so dass eine abrasive Struktur einer Oberfläche der Kartoffelschälscheibe nach oben zeigte; manuelles Umdrehen der Kartoffelschälscheibe; Aufstecken der Kartoffelschälscheibe mit der abrasiven Struktur nach unten auf das Werkzeug, so dass die abrasive Struktur zu einem Boden des Speisenzubereitungsgefäßes zeigt; Drehen des Werkzeugs. Insbesondere dreht sich die Kartoffelschälscheibe nicht mit derselben Drehgeschwindigkeit mit dem Werkzeug mit, wenn die Kartoffelschälscheibe mit der abrasiven Struktur nach unten zeigend auf das Werkzeug aufgesteckt ist. Die Definitionen, Ausgestaltungen und Erläuterungen der oben beschriebenen Aspekte der Erfindung und der nachfolgenden Figurenbeschreibung gelten auch für diesen Aspekt der Erfindung.

In einer Ausführungsform - oder einem weiteren Aspekt, der eine Kartoffelschälscheibe zum Schälen von Kartoffeln zum Einsatz und Betrieb mit einer Küchenmaschine durch ein Aufsetzen und Drehkoppeln der Kartoffelschälscheibe mit einem drehbaren Werkzeug zum Mischen oder Zerkleinern der Küchenmaschine betrifft - ist ein eckiger Zahn vorgesehen, insbesondere ein quaderförmiger Zahn, wobei eine Vielzahl der Zähne auf einer Oberfläche der Kartoffelschälscheibe positioniert sind und/oder mit einer vorderen Fläche tangential, im Wesentlichen tangential oder parallel zu einer Umfangrichtung zeigen. Die Ausrichtung der Zähne ist also in Umfangrichtung oder zumindest im Wesentlichen im Umfangrichtung. Insbesondere haben die Zähne eine erste Fläche an der Rückseite mit einem Winkel α zur Oberfläche der Kartoffelschälscheibe und/oder eine zweite Fläche an der Vorderseite, also insbesondere die vordere Fläche, mit einem Winkel β zur Oberfläche der Kartoffelschälscheibe. Ein Plateau, das vorzugsweise gerade und/oder im Wesentlichen parallel zur Oberfläche der Kartoffelschälscheibe verläuft, verbindet die erste Fläche und die zweite Fläche. Insbesondere liegt der Winkel α und/oder der Winkel β zwischen 80° und 100°, bevorzugt ungefähr 90°. Eine Normale der ersten und/oder zweiten Fläche ist tangential, im Wesentlichen tangential oder parallel zur Umfangrichtung der Kartoffelschälscheibe ausgerichtet. Insbesondere liegen eine Normale der ersten Fläche und eine Normale der zweiten Fläche in einer Ebene, die vorzugsweise parallel zur Mittelachse orientiert ist.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung einer erfindungsgemäßen Kartoffelschälscheibe, die auf ein Werkzeug zum Mischen oder Zerkleinern einer Küchenmaschine (im Teilschnitt dargestellt) manuell lösbar von oben aufgesteckt wird;
- Figur 2:: Schematische Illustration einer Ermittlungsmethode für eine Schäldauer;
- Figur 3a:: Schematische Darstellung von einer Unterseite einer erfindungsgemäßen Kartoffelschälscheibe;
- Figur 3b:: Schematische Schnittdarstellung zentral durch die Kartoffelschälscheibe insbesondere der Fig. 3a;
- Figur 4:: Schematische, räumliche einer Kartoffelschälscheibe, insbesondere der Fig. 3a und/oder 3b;
- Figur 5a:: Schematische Darstellung von ersten Zahn-Varianten einer erfindungsgemäßen Kartoffelschälscheibe;
- Figur 5b:: Schematische Darstellung von zweiten Zahn-Varianten einer erfindungsgemäßen Kartoffelschälscheibe;
- Figur 6a:: Schematische Querschnitt-Darstellung einer ebenen Kartoffelschälscheibe in einer Küchenmaschine;
- Figur 6b:: Schematische Querschnitt-Darstellung eines Wandeinsatzes in einem Speisenzubereitungsgefäß einer Küchenmaschine mit aufgesteckter Kartoffelschälscheibe;
- Figur 6c:: Schematische Querschnitt-Darstellung eines Kartoffelschäl-Topfeinsatzes in einem Speisenzubereitungsgefäß einer Küchenmaschine; und
- Figur 7:: Schematische Darstellung einer Geometrie einer Kartoffelschälscheibe (abrasive Struktur ausgeblendet).

Die Figur 1 zeigt eine Küchenmaschine 1 zum Durchführen eines Speisenzubereitungsvorgangs in einem Speisenzubereitungsgefäß 2. Ein Heizelement 6 kann zum Erhitzen einer Speise 20 insbesondere an einer Unterseite eines Bodens 15 des Speisenzubereitungsgefäßes 2 installiert sein. Zum Zerkleinern und/oder Mischen der Speise 20 kann ein drehbares Werkzeug 9 insbesondere mit einer Schneidkante eingesetzt sein, das über eine nicht gezeigte Welle insbesondere durch eine Öffnung im Boden 15 des Speisenzubereitungsgefäßes 2 mit einem Antrieb 11 zum motorisierten Drehen des Werkzeugs 9 gekoppelt ist. Ein Gehäuse 27 der Küchenmaschine 1 umschließt den Antrieb 11 und stellt eine Aufnahme 29 für das Speisenzubereitungsgefäß 2 bereit. Der Antrieb 11 umfasst einen Elektromotor, der durch eine Steuerungseinrichtung 10 der Küchenmaschine angesteuert werden kann. Insbesondere kann die Steuerungseinrichtung 10 Funktionskomponente der Küchenmaschine wie das Heizelement 6 und/oder den Antrieb 11 steuern. Messsensoren zum Erfassen eines Ist-Zustands wie z.B. ein Temperatursensor 28 können vorhanden sein. Insbesondere ist mindestens ein Gewichtssensor 8 in einem Standfüßen der Küchenmaschine 1, durch die das Gehäuse 27 auf einem Untergrund 30 steht, vorgesehen. Signal des mindestens einen Messensors zur Temperaturmessung oder Gewichtsmessung werden zur Steuerungseinrichtung 10 geleitet, um dort verarbeitet zu werden. Die Steuerungseinrichtung 10 umfasst einen Prozessor 21 und einen Speicher 22.

In Fig. 1 wird illustriert, wie eine Kartoffelschälscheibe 7, die eine abrasive Struktur auf dessen Oberfläche 18 hat, von oben auf das Werkzeug 9, das sich zentral an dem Boden 15 des Speisenzubereitungsgefäßes 2 befindet, manuell aufgesteckt 35 wird, um eine ebenfalls manuell lösbaren, rotatorisch gekoppelten Verbindung mit dem Werkzeug herzustellen, so dass sich im Betrieb die Kartoffelschälscheibe 7 mit dergleichen Drehgeschwindigkeit 26 dreht wie das Werkzeug 9. Bevorzugt erfolgt die rotatorische Kopplung mithilfe eines Mitnehmers 25, der sich an der Unterseite der Kartoffelschälscheibe nach unten in Richtung des Bodens 15 des Speisenzubereitungsgefäßes 2 erstreckt. Ein sich radial erstreckender Arm des Werkzeugs 9, der eine Schneide aufweist, stößt dadurch beim Rotieren gegen den Mitnehmer 25 und liegt fortan während der Rotationsbewegung an dem Mitnehmer 25 an, um den Mitnehmer 25 vor sich her zu drücken. Das Werkzeug 9 hat mindestens einen solchen Arm, höchstens jedoch sechs, bevorzugt genau vier solcher Arme. Der mindestens einen Arm oder alle Arme des Werkzeugs 9 verlaufen in einem axialen Bereich unterhalb des freien Endes des Werkzeugs 9.

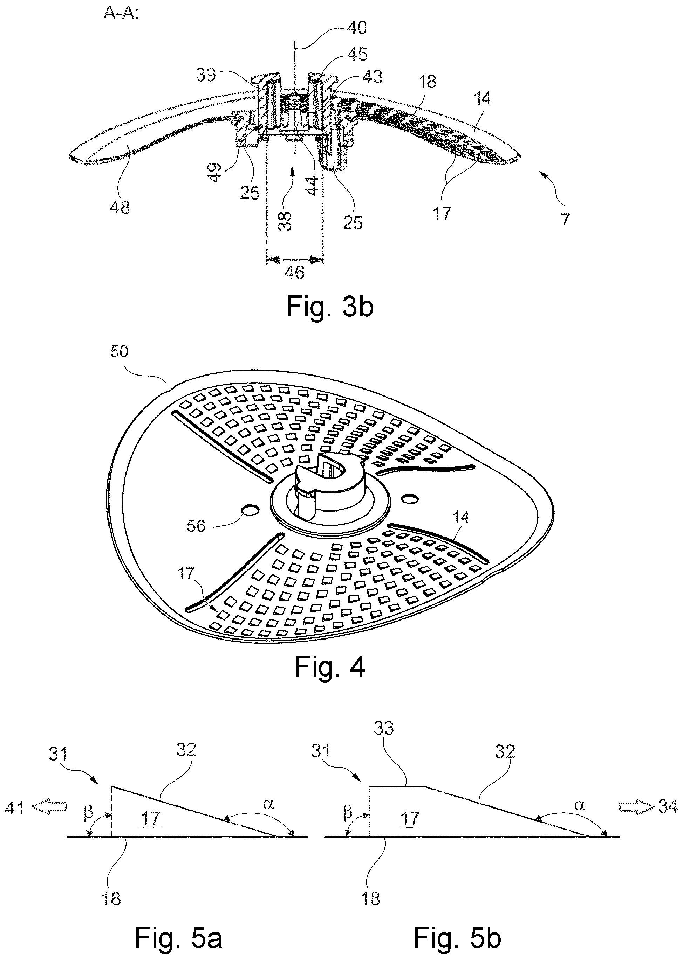

Insbesondere weist die Kartoffelschälscheibe 7 keine weitere Struktur für eine rotatorische Kopplung mit dem Werkzeug 9 auf, was das Aufstecken 25 erleichtert. Eine aufwändiges, korrektes und präzises rotatorisches Ausrichten zum Aufstecken 25 kann dadurch entfallen. Insbesondere umfasst die Kartoffelschälscheibe 7 einen Rastarm 44, der sich parallel zur Mittelachse 40 erstreckt, um die sich die Kartoffelschälscheibe 7 im Betrieb dreht. Der Rastarm 44 kann radial elastisch verschwenkt werden. Vorzugsweise hat der Rastarm 44 eine nach innen zur Mittelachse 40 gerichtete Rastnase 45 (vgl. Fig. 3b). Beim Aufstecken 35 setzt der Benutzer die Kartoffelschälscheibe 7 zunächst mit der Öffnung 38 mittig auf ein freies Ende des Werkzeugs 9, das sich nach oben erstreckt und zur Mittelachse 40 zentriert und insbesondere rotationssymmetrisch ist. Die Innenkontur 39, die an einer Vielzahl von Stellen oder Bereichen über den Innenumfang verteilt an der äußeren Mantelfläche des freien Endes des Werkzeugs 9 anliegt, wird auf das freie Ende des Werkzeugs 9 geschoben. Wenn das freie Ende beim Aufstecken 35 die Rastnase 45 erreicht, ist ein zusätzlicher, manueller Druck von oben auf die Kartoffelschälscheibe 7 vom Benutzer aufzubringen, um den Rastarm 44 mit der Rastnase 45 radial nach außen zu verdrängen und dadurch zu verschwenken. Die Rastnase 45 schleift in der weiteren Aufsteckbewegung an der äußeren Mantelfläche des freien Endes des Werkzeugs 9 entlang, bis eine umlaufende Ringnut 42 des Werkezeugs 9 erreicht ist, die sich im Bereich des freien Endes des Werkzeug 9 befindet und sich um die Mittelachse 40 auf einer Ebene senkrecht zur Mittelachse 40 erstreckt. Die Ringnut 42 ist eine geschlossene, umfängliche Ausnehmung im freien Ende des Werkzeugs 9. Wenn die Rastnase 45 die Ringnut 42 erreicht, erfolgt ein Einrasten 37 der Rastnase 45 radial in Richtung der Mittelachse 40 in die Ringnut 42. Die Kontur der Rastnase 45 ist an die Kontur der Ringnut 42 angepasst. Der Rastarm 44 federt dann radial nach innen zurück und/oder nimmt nach dem Einrasten 37 wieder seine parallel zur Mittelachse orientierte Stellung ein. Die Kartoffelschälscheibe 7 hat in der axialen Stellung des Einrastens 37 seine vorgesehene Aufsteck-Position erreicht. Die Kartoffelschälscheibe wird durch das Einrasten 37 in der axialen Position relativ zum Werkzeug 9 gehalten.

Wenn im Betrieb durch ein ungleichmäßiges Gewichtsverteilung der Kartoffeln, eine ungleichmäßige Bewegung der Kartoffeln oder durch eine aufsteigende Wasserströmung eines Wasserbads axiale Kräfte auf die Kartoffelschälscheibe 7 wirken, kann hierdurch ein unplanmäßiges Lösen der Kartoffelschälscheibe 7 (nach oben) aus der vorgesehenen Aufsteck-Position oder ein Lösen von dem Werkzeug 9 vermieden werden.

In einer Ausgestaltung ist die Steuerungseinrichtung 10 so eingerichtet, dass sie das Erreichen der vorgesehenen Aufsteck-Position mithilfe einer Auswertung der Signale mindestens eines Gewichtssensors 8 erkennt und/oder erst dann eine Aktivierung eines Kartoffelschäl-Modus zulässt, wenn sich die Kartoffelschälscheibe 7 in der vorgesehenen Aufsteck-Position befindet. Durch das Einrasten 37 wird ein Bewegungsimpuls erzeugt, der mithilfe der Gewichtssensoren 8 erfasst werden kann.

Nach dem Aufstecken 25 der Kartoffelschälscheibe 7 wird ein Deckel 3 geschlossen, in dem der Deckel 3 von oben auf das Speisenzubereitungsgefäßes 2 aufgesetzt 36 wird. Eine Verriegelungseinrichtung 23 kann vorgesehen sein, um den Deckel 3 beispielsweise mit Walzen wie in Figur 1 gezeigt durch eine mit Pfeilen illustrierte Schwenkbewegung im geschlossen Zustand zu verriegeln.

Kartoffeln werden in das Speisenzubereitungsgefäßes 2 hinzugefügt, insbesondere durch die Deckelöffnung 12 des Deckels 3. Vorzugsweise wird Wasser in das Speisenzubereitungsgefäßes 2 gegeben, bevorzugt bis zum Eintauchen der gesamten Kartoffelschälscheibe insbesondere bis maximal ungefähr 1 cm oder 6 cm oberhalb der obersten Stelle der Kartoffelschälscheibe 7. Bei 1 cm entsteht eine vergleichsweise starke Wasserströmung von unten nach oben, die beim Schälen auf die Kartoffeln trifft, bevorzugt von unten durch Öffnungen in der Kartoffelschälscheibe 7. Bei 6 cm rollen die Kartoffeln während des Schälens auf der Kartoffelschälscheibe 7 durch das Wasserbad, so dass hierdurch abgeschälte Reste von der Kartoffeloberfläche entfernt werden. Beispielsweise werden insgesamt 600ml Wasser zugeführt.

Zum Starten des Schälvorgangs wird das Werkzeug 9 motorisiert in eine erste Rotationsrichtung 41 gedreht. Schälkanten der abrasiven Struktur auf der Oberfläche 18 der Kartoffelschälscheibe 7 kommen durch das Drehen in die erste Rotationsrichtung 41 in Eingriff mit den Kartoffeln, die sich auf der Kartoffelschälscheibe 7 innerhalb des Speisenzubereitungsgefäßes 2 befinden. Die abrasive Struktur kann in einer Ausgestaltung, die exemplarisch in Fig. 1 illustriert ist, zackenartig oder tetraederförmig sein. Bevorzugt sind auch für das Ausführungsbeispiel der Fig. 1 rampenförmige Vorsprünge zum Bilden der abrasiven Struktur. In einer weiteren Ausgestaltung kann die abrasive Struktur für das Ausführungsbeispiel der Fig. 1 durch ein Schleifmittel mit einer Körnung erzeugt worden sein, die höchsten 800 µm, insbesondere höchstens 600 µm und/oder mindestens 500µm beträgt. Auf alle diese möglichen Varianten wird später genauer eingegangen.

Über eine Benutzerschnittstelle 24, die insbesondere ein Touchscreen-Display 4 oder einen Knopf 5 umfassen, kann der Benutzer Informationen und Anweisungen von der Steuerungseinrichtung 10 erhalten und Eingaben für die Steuerungseinrichtung 10 tätigen. Vorzugsweise ist der Knopf 5 ein Drehknopf. In einer Ausgestaltung wird es dem Benutzer ermöglicht, die Schäldauer manuell anzupassen, nach zu justieren oder einzustellen, vorzugsweise mithilfe des Drehknopfes.

Die Benutzerschnittstelle 24 kann durch den Benutzer betätigbare Bildzeichens 13 auf dem Touchscreen-Display 4 umfassen. Vorzugsweise hat die Steuerungseinrichtung 10 Zugriff auf digitale Rezepte mit mehreren Rezeptschritten, die mithilfe der Benutzerschnittstelle 24 durch den Benutzer und die Küchenmaschine zum Zubereiten einer Speise 20 umgesetzt werden können.

Allgemein sorgt die Steuerungseinrichtung 10 auf Basis von einem oder mehreren Kochparametern, die im digitalen Rezept definiert oder durch den Benutzer manuell über die Benutzerschnittstelle 24 eingestellt werden, dafür, dass eine Speise 20 in dem Speisenzubereitungsgefäß 2 in gewünschter Weise durch ein entsprechendes Steuern des Heizelements 6 und/oder des Antriebs 11 zubereitet wird. Der Schälvorgang kann als ein Rezeptschritt in einem solchen digitalen Rezept programmiert sein. Kartoffeln stellen dann die Speise 20 dar, die in Fig. 1 der Übersichtlichkeit halber ausgeblendet sind.

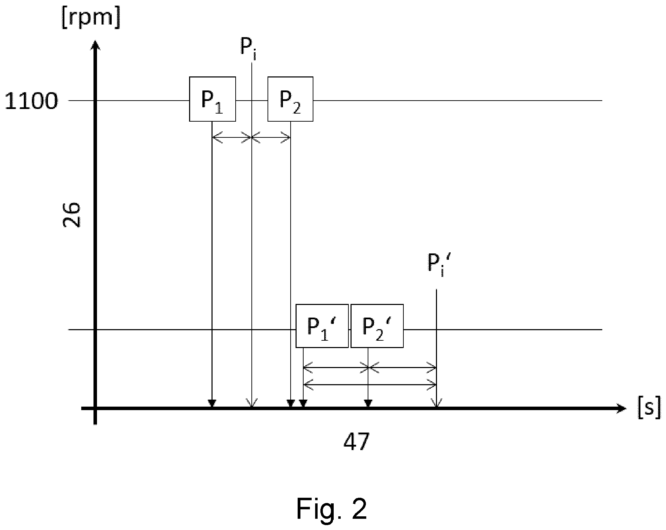

In einer Ausgestaltung ist ein Kartoffelschäl-Modus vorgesehen. Der Kartoffelschäl-Modus kann durch einen Rezeptschritt und/oder durch den Benutzer mithilfe der Benutzerschnittstelle 24 aktiviert werden. Bei einer Aktivierung des Kartoffelschäl-Modus ist bevorzugt vorgesehen, dass die Steuerungseinrichtung 10 das Werkzeug 9 mit einer vordefinierten Drehgeschwindigkeit 26 (vgl. Fig. 2) in die erste Rotationsrichtung 41 dreht. Insbesondere wird die vordefinierte Drehgeschwindigkeit 26 und/oder eine Schäldauer 47 fest vorgegeben und/oder über die Benutzerschnittstelle 24 dem Benutzer vorgeschlagen, z.B. mithilfe einer Ausgabe oder Anzeige über den Touchscreen-Display 4.

Eine Kartoffelschälscheibe 7 hat vorzugsweise - wie in Fig. 1, 3 und 4 gezeigt - eine Wellenform 19 mit einer Vielzahl von Zähnen 17 auf dessen Oberfläche 18.

Die Figur 2 illustriert eine Ausgestaltung, in der die Küchenmaschine 1, die insbesondere mithilfe des mindestens einen Gewichtssensors 8 ein Gewicht der Kartoffeln in dem Speisenzubereitungsgefäß 2 ermittelt hat, in Abhängigkeit von dem ermittelten Gewicht eine Schäldauer 47 ermittelt, so dass das Werkzeug 9 für die ermittelte Schäldauer 47 in die erste Rotationsrichtung 41 gedreht werden kann. Die Fig. 2, diese Ausgestaltung und die nachfolgende Beschreibung zu Fig. 2 kann in Weiterentwicklungen auch so angewendet werden, dass anstelle des Gewichtes in einer Weiterentwicklung eine Kartoffelgröße oder in einer weiteren Weiterentwicklung ein Gewicht und eine Kartoffelgröße analog verwendet werden. In Fig. 2 steht die Einheit "rpm" steht für "rotations per minute" (Umdrehungen pro Minute). Die Einheit "s" steht für Sekunden.

In einem Speicher 22 der Küchenmaschine 1 oder eines nicht dargestellten Cloud- oder Server-PCs sind mindestens zwei vordefinierte Wertepaare P₁, P₂ hinterlegt. Ein erstes Wertepaar P₁ umfasst eine erste Schäldauer 47, eine erste Drehgeschwindigkeit 26 und eine erste Zustandsgröße (erstes Gewicht oder erste Kartoffelgröße oder erstes Gewicht und erste Kartoffelgröße), für das die erste Schäldauer 47 des ersten Wertepaares P₁ in der ersten Rotationsrichtung 41 mit der ersten Drehgeschwindigkeit 26 anzuwenden ist. Ein zweites Wertepaar P₂ umfasst eine zweite Schäldauer 47, die erste Drehgeschwindigkeit 26 und eine zweite Zustandsgröße (zweites Gewicht oder zweite Kartoffelgröße oder zweites Gewicht und zweite Kartoffelgröße), für das die zweite Schäldauer 47 des zweiten Wertepaares P₂ in der ersten Rotationsrichtung 41 mit der ersten Drehgeschwindigkeit 26 anzuwenden ist.

Wenn der Schäl-Modus aktiviert wird, veranlasst die Steuerungseinrichtung 10 den Antrieb 11, das Werkzeug 9 und damit die Kartoffelschälscheibe 7 in der ersten Rotationsrichtung 41 zu drehen. Die Schäldauer 47 für dieses Drehen in die erste Rotationsrichtung 41 wird dabei durch einen Prozessor 21 der Steuerungseinrichtung 10, eines Cloud- oder Server-PCs durch lineare Interpolation auf Basis der beiden vordefinierten, d.h., hinterlegten, Wertepaare P₁, P₂ ermittelt. Die von den Wertepaaren P₁, P₂ umfassten Werte stammen aus Tests, die vom Hersteller wurden.

Anhand der ermittelten Zustandsgröße insbesondere bei der Aktivierung des Schäl-Modus interpoliert der Prozessor 21 die anzuwendende Schäldauer 47 linear zwischen den mindestens oder genau zwei Wertepaaren P₁, P₂. Wenn die Zustandsgröße bereits vorliegt, wird die Zustandsgröße durch Zugriff auf die vorliegende Zustandsgröße ermittelt.

Für eine lineare Interpolation wird insbesondere folgende Formal verwendet: Interpolierte Schäldauer (im Punkt Pᵢ in Fig. 2) = erste Schäldauer + (ermittelte Zustandsgröße - erste Zustandsgröße) x (zweite Schäldauer - erste Schäldauer) / (zweite Schäldauer - erste Schäldauer)

Beispielsweise enthält das erste Wertepaar P₁ folgende werden: erste Drehgeschwindigkeit 26 = 1100 Umdrehungen pro Minute, erste Zustandsgröße = erstes Gewicht = 500 g, erste Schäldauer 47 = 180 s, insbesondere Rotationsdrehrichtung = erste Rotationsrichtung 41 (z.B. Rechtslauf). Beispielsweise enthält das zweite Wertepaar P₂ folgende werden: erste Drehgeschwindigkeit 26 = 1100 Umdrehungen pro Minute, zweite Zustandsgröße = zweites Gewicht = 800 g, zweite Schäldauer 47 = 300 s, insbesondere Rotationsdrehrichtung = erste Rotationsrichtung 41 (z.B. Rechtslauf). Ermittelte Zustandsgröße = ermitteltes Gewicht = 650 g. Unter Anwendung der oben genannten Formel wird anhand des ermittelten Gewichts von 650 g eine linear interpolierte Schäldauer von 240 Sekunden ermittelt.

In einer Ausgestaltung sind zusätzlich Wertepaare P₁', P₂' für eine zweite Drehgeschwindigkeit, z.B. für 500 Umdrehungen pro Minute, hinterlegt. In einer Weiterentwicklung kann die Steuerungseinrichtung 10 anhand eines Parameters für das Schälen zu einer zweiten Drehgeschwindigkeit wechseln. Der Parameter kann eine gewünschte und auswählbare Schäleigenschaft wie z.B. "schnelles Schälen" oder ein Überschreiten eines Grenzwertes hinsichtlich des Gewichtes und/oder der Kartoffelgröße sein. Der Parameter kann auch eine Rezeptschrittvorgabe oder eine Sensorinformation der physikalischen Eigenschaften aus dem Inneren des Speisenzubereitungsgefäßes 2, z.B. die Temperatur, sein. Bei 500 rpm und 500 g Kartoffeln kann beispielsweise im Wertepaar P₁' eine Schäldauer von 5,25 s hinterlegt sein. Ein zweites Wertepaar P₂' mit 500 Umdrehungen pro Minute kann beispielsweise eine Schäldauer von 7 s bei 650 g Kartoffeln umfassen. Entsprechend kann auch interpoliert werden. Fig. 2 zeigt exemplarisch, dass unter Verwendung der oben angegebenen Formel auch eine Schäldauer extrapoliert werden kann, wenn das ermittelte Gewicht nicht zwischen dem Gewicht des ersten Wertepaares P₁' und zweiten Wertepaares P₂' liegt. Dies gilt analog auch für das oben erläuterte Beispiel mit den Wertepaaren P₁ und P₂. Im Sinne dieser Anmeldung umfasst daher die Methode der Interpolation anhand von mindestens zwei Wertepaaren automatisch auch eine Extrapolation. Interpolierte und extrapolierte Werte liegen stets auf ein und derselben Geraden bei einer Illustration als eine Funktionskurve.

In einer Ausgestaltung können absolute Untergrenzen und/oder Obergrenzen für die Schäldauer festgelegt sein, welche die Ergebnisse der Interpolation bzw. Extrapolation innerhalb eines festgelegten Wertebereiches für die Schäldauer hält.

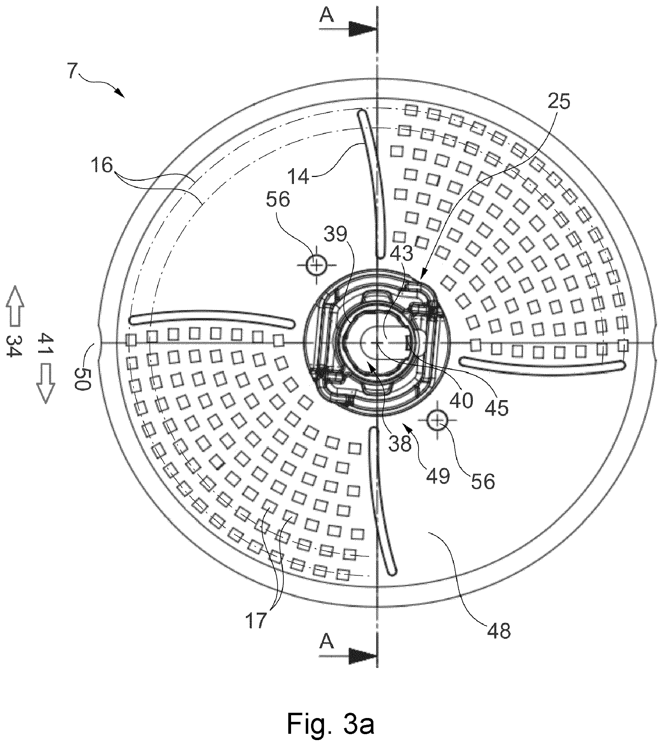

Die Figur 3a zeigt eine erfindungsgemäße Kartoffelschälscheibe 7, insbesondere mit einem Durchmesser von mindestens 120 mm und/oder höchstens 160 mm, bevorzugt ungefähr ca. 148 mm oder 150 mm. Infolge der Wellenform 19 (vergleiche Fig. 1) weist die gezeigte Kartoffelschälscheibe 7 eine Höhe von mindestens 20 mm und/oder höchstens 40 mm, bevorzugt ungefähr 28 mm oder 30 mm auf. Vorzugsweise umfasst die Kartoffelschälscheibe 7 eine Vielzahl von Schlitzen 14, die sich bogenförmig innerhalb der inneren und äußeren Begrenzung der Kartoffelschälscheibe 7 im Wesentlichen in radiale Richtung erstrecken und in Umfangrichtung gleichmäßig voneinander beabstandet sind. Die individuelle Anordnung der Zähne 17, die an Schlitze 14 angrenzen, werden nach rein ästhetischen Gesichtspunkten angeordnet.

Die Zähne 17 sind in dem bevorzugten Ausführungsbeispiel der Fig. 3a in einer Vielzahl von Ringbahnen 16 angeordnet, d.h., entlang von konzentrischen Kreisen um die Mittelachse 40. Vorzugsweise ist die Ausrichtung der Zähne 17 in Richtung zu der jeweiligen Ringbahn 16, bevorzugt parallel zu einer Tangente zur Ringbahn 16, wobei die Tangente durch einen Schnittpunkt einer mittigen Längsachse eines Zahns 17 mit der Ringbahn 16 verläuft. In einer alternativen oder ergänzenden Ausgestaltung sind die Zähne 17 der Kartoffelschälscheibe in zueinander parallelen, geradlinigen Reihen angeordnet, die insbesondere radial bezogen auf die Mittelachse 40 verlaufen und/oder Bereiche mit jeweils unterschiedlich orientierten, parallelen Reihen bilden.

In einer Ausgestaltung haben die Zähne 17 eine Breite quer zu deren Ausrichtung von mindestens 1 mm und/oder höchstens 5 mm, bevorzugt höchstens 2 mm. In einer Ausgestaltung haben die Zähne 17 eine Länge parallel zu deren Ausrichtung von mindestens 1 mm und/oder höchstens 5 mm. In einer Ausgestaltung haben die Zähne 17 eine Höhe von höchstens 2 mm, mindestens jedoch eine Höhe von 0,5 mm. Insbesondere sind die Zähne länger als breit und/oder länger als hoch und/oder breiter als hoch und/oder ungefähr so hoch wie breit an einer Vorderseite der Zähne 17.

Eine Ausrichtung eines Zahns 17 ist die Richtung seiner Längserstreckung auf der Oberfläche 18 der Kartoffelschälscheibe 7, wobei eine Vorderseite des Zahns 17, welche eine Schälkante zum Schälen aufweist, in die Richtung der Ausrichtung zeigt. Ein Schälen findet daher durch ein Drehen in die erste Rotationsrichtung 41 statt, die den Zahn 17 im Wesentlichen in die Richtung seiner Ausrichtung bewegt.

Vorzugsweise entspricht die erste Rotationsrichtung 41, die im Wesentlichen in die Ausrichtungsrichtung der Zähne 17 zeigt, einem Rechtslauf und die entgegengesetzte, zweite Rotationsrichtung 34 einem Linkslauf (vgl. Fig. 3a). Alternativ kann je nach Ausrichtung der Zähne auf der Kartoffelschälscheibe die erste Rotationsrichtung 41 einem Linkslauf entsprechen und die zweite Rotationsrichtung 34 einem Rechtslauf.

Insbesondere hat die Kartoffelschälscheibe 7 wie in Fig. 3a gezeigt einen Scheibenteil 48, der sich radial vollumfänglich von einem zentralen Nabenteil 49 mit der Öffnung 38 und der Innenkontur 39 nach außen erstreckt. Die Zähne 17 sind in Fig. 3a von unten zu erkennen, weil bei im Wesentlichen konstanter Scheibendicke des Scheibenteils 48 die Zähne 17 an der Oberseite hervorstehen. Insbesondere bilden die Zähne an der Unterseite eine Vertiefung, der zur Vorsprungskontur an der Oberfläche korrespondiert. Insbesondere zeigt Fig. 3a solche Vertiefungen, die zu den Vorsprüngen der Zähne, die z.B. in Fig. 3b gezeigt werden, korrespondieren.

Die Zähne 17 sind auf parallelen Ringbahnen 16 angeordnet, die koaxial um die Mittelachse 40 verlaufen. Die Zähne selber haben eine rechteckige Außenkontur und/oder sind nicht gebogen. Die Zähne 17 haben in der Draufsicht und/oder in der Unteransicht eine im Wesentlichen quadratische Außenkontur. Es gibt Abschnitte in Umfangrichtung zwischen zwei Spalten 14, zwischen denen die Zähne weggelassen wurden. Dort ist eine glatte Oberfläche 18 an der Oberseite (und Unterseite).

Tests haben gezeigt, dass besonders wenige Schlitze, z.B. vier Schlitze, beim Benutzer einen besonders ästhetischen Eindruck erwecken, weil diesen dann eine besondere Aufmerksamkeit geschenkt wird und ein für den Benutzer entspannendes Bild erzeugt. Andererseits können auch eine Vielzahl von Schlitzen, z.B. achtzehn Schlitze in Verbindung mit einer abrasiven Struktur, als besonders ästhetisch und ansprechend wahrgenommen werden. Für diese Empfindung beim Benutzer ist es unerheblich, ob die Schlitze an einer Winkelposition sich in einer durchgängigen Öffnung radial erstrecken oder in mehrere Öffnungen unterteilt sind. Solche mehrteiligen Schlitze, z.B. in Erstreckungsrichtung dreigeteilte Schlitze an einer Winkelposition, erwecken beim Benutzer einen geschlitzt-flächigen Gesamteidruck, der ebenfalls als besonders attraktiv wahrgenommen wird. Verbessert werden kann der ästhetische Eindruck beim Benutzer durch einen leicht bogenförmigen Verlauf der Schlitze radial von der Mittelachse 40 weg, weil dies dynamischen und modern wirkt. Besonders positiv haben Benutzer in Tests das nur teilweise bedecken der Oberfläche 18 mit abrasiven Strukturen empfunden, weil das Abwechseln von glatten und nichtglatten Oberflächenabschnitten überraschend und interessant wirkt. Es vermittelt das Gefühl von Innovation und Hochwertigkeit. Besonders wurde dies durch vier Abschnitte in Umfangrichtung erhalten, die abwechselnd glatt und abrasive Strukturen aufweisen. Die individuelle Anordnung der Zähne 17, die an Schlitze 14 angrenzen, wurden ebenfalls nach rein ästhetischen Gesichtspunkten angeordnet.

Die Kartoffelschälscheibe 7 wird zum Schälen von Kartoffeln mit der Öffnung 38 auf ein Werkzeug 9 aufgesteckt. Radial nach innen gerichtete, sich längs der Mittelachse 40 erstreckende Wülste, die über den Umfang der Innenkontur 39 verteilt sind, dienen einem stabilen Sitz der Kartoffelschälscheibe 7 auf dem rotierbaren Werkzeug 9 der Küchenmaschine 1. Ein Freischnitt 43 erlaubt ein axiales hervorstehen eines zentralen Abschlusselements des Werkzeugs, z.B. einer Befestigungsniete, und gleichzeitig das Erzeugen eines axialen Rastarms 44 mit einer an dessen freiem Ende radial nach innen hervorstehenden Rastnase 45, die in der vorgesehenen Aufsteck-Position der Kartoffelschälscheibe 7 auf dem rotierbaren Werkzeug 9 in eine entsprechende Ringnut 42, des Werkzeugs 9 eingreifen kann. Ein manuell lösbarer, jedoch stabiler Sitz der Kartoffelschälscheibe 7 im aufgesteckten Zustand kann so erzielt werden. Insbesondere handelt es sich dabei um eine Schnappverschlussverbindung. Ein Mitnehmer 25 ermöglicht ein Koppeln des Werkzeugs 9 mit der Kartoffelschälscheibe 7, so dass eine Rotation des Werkzeugs 9 zu einer Rotation der Kartoffelschälscheibe 7 insbesondere mit derselben Rotationsgeschwindigkeit führt. Mindestens eine Bohrung 56, bevorzugt zwei Bohrungen 56, und/oder mindestens eine Kerbung 50, bevorzugt zwei Kerbungen 50, erlauben einen verbesserten Wassertransport zur Oberfläche 18.

In einer Ausgestaltung wird im Schälmodus zunächst in die erste Rotationsrichtung 41 zu Schälen und unmittelbar danach in die zweite Rotationsrichtung 34 zum Glätten und/oder Polieren gedreht (ohne ein Lösen oder Wenden der Kartoffelschälscheibe 7). Insbesondere ist ein digitales Rezept und/oder die Steuerung 10 so eingerichtet, dass mithilfe der Kartoffelschälscheibe 7 ein kombinierter Ablauf wie Schälen und Polieren, Schälen und Garen, Einweichen und Schälen und/oder das Erzielen einer unterschiedlichen Oberflächengüte bei verschiedenen Lebensmittel, Zutaten und/oder Speisen wie Kartoffeln oder Rüben erzielt werden kann. Darüber hinaus wird ein komplexer Speisenzubereitungsvorgang (beispielsweise durch ein entsprechendes, digitales Rezept oder ein entsprechendes manuelles Einstellen an der Küchenmaschine) ermöglicht, in dem Lebensmittel zunächst geschält, anschließend poliert und schließlich gegart werden, vorzugsweise ohne ein Lösen, Wenden oder Wechseln der Kartoffelschälscheibe 7. Die Unterstützung eines solch komplexen Speisenzubereitungsvorgangs durch den Benutzer kann minimiert oder sogar mit Ausnahme des Aktivierens des digitalen Rezeptes und zuführen der Zutaten eliminiert werden.

Bei Anwendung einer umgekehrten zweiten Rotationsrichtung 34, die im Wesentlichen entgegengesetzt zur Ausrichtungsrichtung der Zähne 17 ist, kann mit der in gleicher Weise auf dem Werkzeug 9 angebrachten Kartoffelschälscheibe 7 eine Speisenzubereitung vom Typ "slow cooking" und "sous vide" durchgeführt werden, die im Folgenden in Verbindung mit der in Fig. 1 gezeigten Küchenmaschine erläutert werden und auch analog mit den rechteckig rampenförmigen Zähne 17 der Kartoffelschälscheibe der Fig. 3a und 3b umgesetzt werden kann.

Für eine Speisenzubereitung vom Typ "slow cooking" und "sous vide" wird die Kartoffelschälscheibe 7 auf das Werkzeug 9 aufgesteckt 35. Wasser und Zutaten (mit oder ohne Beutel um die Zutaten oder Speise 20) werden in das Speisenzubereitungsgefäß 2 eingefüllt. Der Benutzer kann über einen zweiten Modus des Küchengeräts 1, der durch die Steuerung 10 unterstützt wird, oder durch entsprechende manuelle Einstellungen einer Vorgangszeit, einer Temperatur und/oder Drehzahl des Werkzeugs 9 den Speisenzubereitungsvorgang starten. Die Wellenform 19 und die Rotationsbewegung der Kartoffelschälscheibe 7 in die zweite Rotationsrichtung 34, die von dem Werkzeug 9 angetrieben wird, bewirkt eine gleichmäßige Durchmischung und Temperaturverteilung im Speisenzubereitungsgefäß 2 ein optimales Garen der Speise 20. Durch die kompakte Bauform und Wellenform 19 der Kartoffelschälscheibe 7 kann das Volumens des Speisenzubereitungsgefäßes 2 optimal genutzt werden. Die Zähne 17 haben in der zweiten Rotationsrichtung 34 keine Auswirkung auf die Speise 20. Durch das Drehverhalten in diesem zweiten Modus kann eine gleichmäßige Temperaturverteilung der Speise im Speisenzubereitungsgefäß 2 erhalten werden.

In einer Ausgestaltung ist vorgesehen, dass die Kartoffelschälscheibe 7 auf der Unterseite eine weitere Funktionsoberfläche aufweist, z.B. eine glatte Oberfläche, mit der ebenfalls "slow cooking" und "sous vide" durchgeführt werden kann. Besonders bei Vorsehen einer Kartoffelschälscheibe 7 mit Vertiefungen auf der Unterseite kann die Kartoffelschälscheibe 7 in einer Ausgestaltung umgedreht auf das Werkzeug 9 aufgesteckt werden. Die Speise 7 bei der Speisenzubereitung vom Typ "slow cooking" und "sous vide" wird dann verbessert mitbewegt, ohne die Speise oder einen Beutel um die Speise zu beschädigen.

Figur 3b zeigt eine schematische Darstellung eines Schnittes, der zentral durch eine Kartoffelschälscheibe 7 verläuft, insbesondere der Kartoffelschälscheibe 7 der Fig. 3a. Auch in Fig. 3b sind die Vertiefungen der Zähne 17 an der Unterseite der Kartoffelschälscheibe 7 sichtbar. In der gezeigten Schnittdarstellung hat die Kartoffelschälscheibe 7 insgesamt eine gebogene Form. Insbesondere verläuft der Scheibenteil 48 der Kartoffelschälscheibe 7 wellenförmig um den Nabenteil 49. In der Schnittansicht der Fig. 3b ist die Wellenform wegen der Schnittdarstellung nicht sichtbar. Der Mitnehmer 25 erstreckt sich ausgehend vom äußeren Rand des Nabenteils 49 axial nach unten. Die Länge des Mitnehmers 25 ist mindestens halb so lang wie die Öffnung 38. Die Fig. 3b zeigt den Freischnitt 43, der den Rastarm 44 erzeugt. An dem freien Ende des Rastarms 44 ist die Rastnase 45 angeordnet.

In einer Ausgestaltung hat der Scheibenteil 48 in der Draufsicht im Wesentlichen die Form einer Lochscheibe, d.h., eine Scheibe mit einer zentralen Durchgangsbohrung. Vorzugsweise ist auch bei einer wellenförmigen Kartoffelschälscheibe 7 ein Innenrand des Scheibenteils 48 auf einer Ebene senkrecht zur Mittelachse 40. Von diesem ebenen Innenrand, der vorzugsweise mit dem Nabenteil 49 insbesondere stoffschlüssig (Umspritzen oder Kleben) oder kraftschlüssig (von oben und unten eingespannt) verbunden ist, erstreckt sich der Scheibenteil 48 in radiale Richtung mit unterschiedlichen Steigungen in Abhängigkeit von der Winkelposition zur Mittelachse 40. Während der innere Rand des Scheibenteils 48 auf einer Ebene senkrecht zur Mittelachse 40 ist, beschreibt der äußere Rand eine Welle in Umfangrichtung mit mindestens einem oder zwei Wellenbergen und Wellentälern.

Insbesondere umfasst die Kartoffelschälscheibe 7 Metall und/oder ist zweiteilig oder genau dreiteilig aufgebaut, d.h., aus separat gefertigten Teilen hergestellt. Alternativ ist die gesamte Kartoffelschälscheibe 7 einstückig mittels Spritzgusses aus Kunststoff hergestellt.

Bevorzugt ist der Scheibenteil 48 aus Metall, vorzugsweise ein Blech, insbesondere mit einer (konstanten) Dicke von mindestens 1 mm und/oder höchstens 2 mm. In einer Ausgestaltung ist der Nabenteil 49 aus Kunststoff, vorzugsweise Polypropylen, hergestellt und/oder um einen inneren Randbereich des Scheibenteils 48 umspritzt. Vorzugsweise ist der Nabenteil 49 ebenfalls aus zwei separat gefertigten Teilen hergestellt, insbesondere einem unteren Teil und einem oberen Teil. Der Durchmesser 46 der Öffnung 38 beträgt 17 mm, bevorzugt mit einer Übergangspassung.

Die Vorderseite der Zähne 17, die auf der Oberfläche 18 am Rand des Schlitzes 14 angeordnet sind, zeigt in Fig. 3b ungefähr in Richtung des Betrachters.

Figur 4 zeigt eine Kartoffelschälscheibe insbesondere der Fig. 3a und/oder 3b in einer räumlichen Darstellung von schräg oben. Die Rampenform und Ausrichtung der Zähne 17 sind hier gut erkennbar.

Die Figuren 5a und 5b zeigen zwei Zahnvarianten von erfindungsgemäßen Kartoffelschälscheiben 7, die beispielsweise auf die Ausgestaltungen in den Figuren 1, 3, 4 und 7 anwendbar sind, in einer Seitenansicht quer zur Ausrichtung des jeweiligen Zahns 17. Beide Zahnvarianten sind rampenartig und auch rampenförmig. In der Zahnvariante der Fig. 5a weist der Zahn 17 eine schräge Fläche 32 an der Rückseite mit einem Winkel α zwischen 140° und 170° zur Oberfläche 18 der Kartoffelschälscheibe 7 auf. Die in Fig. 5b dargestellte Zahnvariante hat zusätzlich zu der Zahnvariante der Fig. 5a noch ein Plateau 33, das sich an das Ende der schrägen Fläche 32 anschließt. In den Zahnvarianten der Fig. 5a und 5b können die schräge Fläche 32 und/oder das Plateau 33 aus Blech sein oder einen Vorsprung aus Vollmaterial aus der Oberfläche 18 begrenzen. Der Vorsprung kann auch durch Umformen eines Bleches erzeugt sein. Die Schälkante 31 hat bevorzugt einen Winkel β zur Oberfläche 18 zwischen 80° und 100°, bevorzugt ungefähr 90° oder 91°. Zwischen der Schälkante 31 und der Oberfläche 18 erstreckt sich bevorzugt ein geschlossener Bereich der Oberfläche 18 oder einen Durchgang. Besonders bevorzugt ist die gesamte Oberfläche 18 der Kartoffelschälscheibe 7 mit Ausnahme der Öffnung 38, der Bohrung 56 und der Schlitze 14 flüssigkeitsundurchlässig geschlossen. In einer Ausgestaltung sind die schräge Fläche 32 eines rampenartigen Zahns 17 geradlinig, eben und/oder mit konstanter Steigung ausgeführt, insbesondere die gesamte schräge Fläche 32.

Die Vorderseite des Zahns 17 ist in Fig. 5a und 5b in die erste Rotationsrichtung 41 und entgegengesetzt zur zweiten Rotationsrichtung 34 ausgerichtet.

In einer Weiterentwicklung haben die Zähne 17 eine eckige Form und/oder jeweils eine erste Fläche an der Rückseite mit einem Winkel α zur Oberfläche 18 der Kartoffelschälscheibe 7 und/oder eine zweite Fläche an der Vorderseite mit einem Winkel β zur Oberfläche 18 der Kartoffelschälscheibe 7 (vgl. Fig. 4b). Ein Plateau, das vorzugsweise gerade und/oder im Wesentlichen parallel zur Oberfläche 18 der Kartoffelschälscheibe 7 verläuft, verbindet die erste Fläche und die zweite Fläche. Insbesondere liegt der Winkel α und/oder der Winkel β zwischen 80° und 100°, bevorzugt ungefähr 90°. Eine Normale der ersten und/oder zweiten Fläche ist tangential, im Wesentlichen tangential oder parallel zur Umfangrichtung der Kartoffelschälscheibe 7 ausgerichtet.

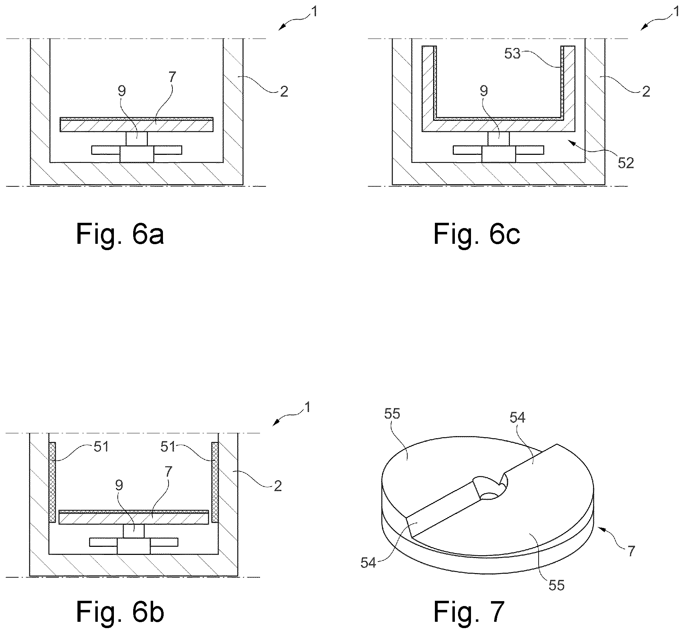

Figur 6a zeigt eine schematische Querschnitt-Darstellung einer ebenen Kartoffelschälscheibe in einer Küchenmaschine 1 (vgl. Fig. 1), wobei die Kartoffelschälscheibe auf ein drehbares Werkzeug 9 der Küchenmaschine 1 aufgesteckt ist und sich innerhalb des Speisenzubereitungsgefäßes 2 befindet. In Fig. 6a ist nur ein Ausschnitt der Küchenmaschine 1 gezeigt. Eine abrasive Struktur mit ausgerichteten Zähnen ist vereinfacht als dicke Linie an der Oberseite der Kartoffelschälscheibe 7 dargestellt. In den gezeigten Ausführungsbeispielen der Fig. 6a, 6b und 6c kann die abrasive Struktur eine geometrisch bestimmte Schneide (wie z.B. rampenförmige oder tetraederförmige Zähne) oder eine geometrisch unbestimmte Schneide (wie z.B. aus einem in der Oberfläche 19 eingebetteten Schleifmittel) aufweisen. Zudem kann in den folgenden Ausführungsbeispielen die eben dargestellte Kartoffelschälscheibe 7 eben, wellenartig oder wellenförmig sein.

Figur 6b zeigt eine schematische Querschnitt-Darstellung des Ausführungsbeispiels der Fig. 6a mit einem zusätzlichen Wandeinsatz 51. Auch bei dem Wandeinsatz 51 ist die abrasive Struktur vereinfacht als dicke Linie dargestellt. Der Wandeinsatz 51 ist bevorzugt flächig bogenförmig und/oder an die Oberfläche der Innenwandung des Speisenzubereitungsgefäßes 2 der Küchenmaschine 1 angepasst und/oder kann manuell lösbar daran befestigt werden. Kartoffeln werden so effizienter geschält.

Figur 6c zeigt eine schematische Querschnitt-Darstellung eines Kartoffelschäl-Topfeinsatzes 52. Auch hier ist die abrasive Struktur vereinfacht als dicke Linie dargestellt. Ein Topfeinsatz 52 kann aus der Kartoffelschälscheibe 7 als Boden und einer Topfeinsatzwandung 53 hergestellt werden.

Figur 7 zeigt eine schematische Darstellung einer Geometrie einer Kartoffelschälscheibe 7, die Stufen 54 umfasst. Die abrasive Struktur ist auch hier der Einfachheit halber nicht illustriert. Wenn die abrasive Struktur keine geometrisch bestimmte Schneide umfasst, kann die abrasive Struktur in einer Ausführungsform durch eine lösbare Lage mit mindestens 0,6 mm und/oder höchstens 2 mm Dicke bereitgestellt werden, die bei Bedarf gewechselt werden kann. Rampenförmige Abschnitte 55 erstrecken sich in Umfangrichtung bis zu einer solchen Stufe 54. Stufen 54 und rampenförmige Abschnitte 55 sind daher in Umfangrichtung abwechseln vorzufinden.

Die Kartoffeln werden im rohen Zustand geschält.

## Patentansprüche

1. Verfahren zum Schälen von Kartoffeln mit einer Küchenmaschine (1), die zur Speisenzubereitung ein abnehmbares Speisenzubereitungsgefäß (2), ein Heizelement (6) zum Erhitzen einer Speise (20) in dem Speisenzubereitungsgefäß (2) und ein drehbares Werkzeug (9) zum Mischen oder Zerkleinern der Speise (20) in dem Speisenzubereitungsgefäß (2) umfasst, mit folgenden Schritten:
- Aufstecken (35) einer Kartoffelschälscheibe (7), die eine abrasive Struktur auf dessen Oberfläche (18) hat, von oben auf das Werkzeug (9), das sich zentral an einem Boden (15) des Speisenzubereitungsgefäßes (2) befindet, zum Herstellen einer manuell lösbaren, rotatorisch gekoppelten Verbindung, so dass sich im Betrieb die Kartoffelschälscheibe (7) mit dergleichen Drehgeschwindigkeit (26) dreht wie das Werkzeug (9);
- Hinzugeben von Kartoffeln in das Speisenzubereitungsgefäßes (2) von oben auf die Kartoffelschälscheibe (7);
- motorisiertes Drehen des Werkzeugs (9) in eine erste Rotationsrichtung (41) und Schälen der Kartoffeln mit der Kartoffelschälscheibe (7) innerhalb des Speisenzubereitungsgefäßes (2).

2. Verfahren nach Anspruch 1, **gekennzeichnet durch** den Schritt:
- motorisiertes Drehen des Werkzeugs (9) mit der aufgesteckten Kartoffelschälscheibe (7) in eine entgegengesetzte zweite Rotationsrichtung (34).

3. Verfahren nach dem vorhergehenden Anspruch, **dadurch gekennzeichnet, dass** mehrfach zwischen der ersten Rotationsrichtung (41) und der zweiten Rotationsrichtung (34) gewechselt wird, vorzugsweise in einem regelmäßigen Intervall.

4. Verfahren nach einem der vorhergehenden Ansprüche, **dadurch gekennzeichnet, dass** die Küchenmaschine (1) einen Kartoffelschäl-Modus aufweist und bei einer Aktivierung des Kartoffelschäl-Modus die Küchenmaschine (1) veranlasst, dass das Werkzeug (9) mit einer vordefinierten Drehgeschwindigkeit (26) in die erste Rotationsrichtung (41) gedreht wird.

5. Verfahren nach einem der vorhergehenden Ansprüche, **gekennzeichnet durch** die Schritte:
- die Küchenmaschine (1) ermittelt ein Gewicht der Kartoffeln in dem Speisenzubereitungsgefäß (2);
- die Küchenmaschine (1) ermittelt eine Schäldauer (47) in Abhängigkeit von dem ermittelten Gewicht, wobei das Werkzeug (9) für die Schäldauer (47) in die erste Rotationsrichtung (41) gedreht wird.

6. Verfahren nach einem der vorhergehenden Ansprüche, **gekennzeichnet durch** die Schritte:
- die Küchenmaschine (1) erhält oder ermittelt ein Kartoffelgröße der Kartoffeln in dem Speisenzubereitungsgefäß (2);
- die Küchenmaschine (1) ermittelt eine Schäldauer (47) in Abhängigkeit von der Kartoffelgröße, wobei das Werkzeug (9) für die Schäldauer (47) in die erste Rotationsrichtung (41) gedreht wird.

7. Verfahren nach den zwei vorhergehenden Ansprüchen, **dadurch gekennzeichnet, dass** die Schäldauer (47) in Abhängigkeit von dem Gewicht und der Kartoffelgröße ermittelt wird und das Werkzeug (9) für die Schäldauer (47) in die erste Rotationsrichtung (41) gedreht wird.

8. Verfahren nach einem der vorhergehenden Ansprüche, **dadurch gekennzeichnet, dass**
- die Küchenmaschine über mindestens zwei vordefinierte Wertepaare (P1, P2) verfügt, wobei das erste Wertepaar (P1) eine erste Schäldauer für ein erstes Gewicht und/oder für eine erste Kartoffelgröße umfasst, und das zweite Wertepaar (P2) eine zweite Schäldauer für ein zweites Gewicht und/oder für eine zweite Kartoffelgröße umfasst, und
- die Küchenmaschine (1) die Schäldauer (47) in die erste Rotationsrichtung (41) durch lineare Interpolation auf Basis der beiden vordefinierten Wertepaare (P1, P2) ermittelt.

9. Verfahren nach Anspruch 1 oder 2, **gekennzeichnet durch** folgende Schritte:
- eine Steuerungseinrichtung (10) greift auf mindestens einen Wert zu, der zu einem Gewicht und/oder einer Kartoffelgröße der Kartoffeln in dem Speisenzubereitungsgefäß (2) korrespondiert;
- die Steuerungseinrichtung (10) greift auf mehrere vordefinierte Wertepaare (P1, P2, P1', P2`) zu, die für spezielle Werte des Gewichts, der Kartoffelgröße und/oder der Drehgeschwindigkeit (26) eine Schäldauer (47) angeben;
- die Steuerungseinrichtung (10) erhält eine Benutzereingabe für die Drehgeschwindigkeit (26) in die erste Rotationsrichtung (41) oder ermittelt die Drehgeschwindigkeit (26) anhand des Gewichts und/oder der Kartoffelgröße;
- die Steuerungseinrichtung (10) führt anhand des Gewichts und/oder der Kartoffelgröße eine lineare Interpolation auf Basis der vordefinierten Wertepaare (P1, P2, P1`, P2`) für die Drehgeschwindigkeit (26) in die erste Rotationsrichtung (41) durch, um die Schäldauer (47) zu ermitteln; und
- die Steuerungseinrichtung (10) veranlasst einen Antrieb (11) der Küchenmaschine (1), das Werkzeug (9) mit der Drehgeschwindigkeit (26) für die Schäldauer (47) in die erste Rotationsrichtung (41) zu drehen.

10. Verfahren nach einem der vorhergehenden Ansprüche, **dadurch gekennzeichnet, dass** die Drehgeschwindigkeit (26) für die erste Rotationsrichtung (41) mindestens 450 U/min und/oder höchstens 1200 U/min beträgt.

11. Verfahren nach einem der vorhergehenden Ansprüche, **dadurch gekennzeichnet, dass** zum Schälen von Kartoffeln das Werkzeug (9) mit ungefähr 500 U/min oder ungefähr 800 U/min oder ungefähr 1100 U/min in die erste Rotationsrichtung (41) gedreht wird.

12. Verfahren nach einem der vorhergehenden Ansprüche, **dadurch gekennzeichnet, dass** das motorisierte Drehen des Werkzeugs (9) und damit die Kartoffelschälscheibe (7) zum Schälen der Kartoffeln durch die Kartoffelschälscheibe innerhalb des Speisenzubereitungsgefäßes (2) zunächst mit einer ersten Drehzahl für eine erst Schäldauer erfolgt, und anschließend das Werkzeug (9) und damit die Kartoffelschälscheibe (7) zum Schälen der Kartoffeln innerhalb des Speisenzubereitungsgefäßes (2) mit einer zweiten Drehzahl für eine zweite Schäldauer motorisiert gedreht wird, wobei sich die zweite Drehzahl von der ersten Drehzahl unterscheidet, insbesondere niedriger ist als die erste Drehzahl.

13. Küchenmaschine (1) zum Durchführen des Verfahrens nach einem der vorhergehenden Ansprüchen, wobei die Küchenmaschine (1) zur Speisenzubereitung ein abnehmbares Speisenzubereitungsgefäß (2), ein Heizelement (6) zum Erhitzen einer Speise (20) in dem Speisenzubereitungsgefäß (2), ein drehbares Werkzeug (9) zum Mischen oder Zerkleinern der Speise (20) in dem Speisenzubereitungsgefäß (2), das sich zentral an einem Boden (15) des Speisenzubereitungsgefäßes (2) befindet, und eine Kartoffelschälscheibe (7) mit einer abrasiven Struktur auf dessen Oberfläche (18) umfasst, wobei die Kartoffelschälscheibe (7) von oben auf das Werkzeug (9) aufgesteckt ist, derart, dass die Kartoffelschälscheibe (7) manuell lösbaren und rotatorisch gekoppelt mit dem Werkzeug (9) verbunden ist, so dass im Betrieb Kartoffeln in das Speisenzubereitungsgefäßes (2) von oben auf die Kartoffelschälscheibe (7) hinzugegeben werden können und sich die Kartoffelschälscheibe (7) mit dergleichen Drehgeschwindigkeit (26) dreht wie das Werkzeug (9), wenn das Werkzeug (9) motorisiert in eine erste Rotationsrichtung (41) zum Schälen der Kartoffeln mit der Kartoffelschälscheibe (7) innerhalb des Speisenzubereitungsgefäßes (2) gedreht wird.

14. Küchenmaschine (1) nach dem vorhergehenden Anspruch, **dadurch gekennzeichnet, dass** die Küchenmaschine (1) einen integrierten Gewichtssensor (8) zum Ermitteln eines Gewichts der sich in dem Speisenzubereitungsgefäß (2) befindlichen, zu schälenden Kartoffeln umfasst, und eine Steuerungseinrichtung (10) so konfiguriert ist, dass eine Schäldauer (47) für die erste Rotationsrichtung (41) in Abhängigkeit von dem Gewicht ermittelt wird.

15. Küchenmaschine (1) nach einem der zwei vorhergehenden Ansprüche, **dadurch gekennzeichnet, dass** die abrasive Struktur auf der Oberfläche (18) der Kartoffelschälscheibe (7) eine Struktur mit geometrisch unbestimmter Schneide ist, insbesondere durch ein Schleifmittel hergestellt.

16. Küchenmaschine (1) nach einem der zwei vorhergehenden Ansprüche, **dadurch gekennzeichnet, dass** die abrasive Struktur auf der Oberfläche (18) der Kartoffelschälscheibe (7) eine Struktur mit geometrisch bestimmter Schneide ist, insbesondere Vorsprünge jeweils mit einer Fläche von mindestens 5 mm² und/oder höchstens 20 mm².

## Claims

1. Method for peeling potatoes with a food processor (1) which comprises for food preparation a removable food preparation vessel (2), a heating element (6) for heating a food (20) in the food preparation vessel (2), and a rotatable tool (9) for mixing or chopping the food (20) in the food preparation vessel (2), with the following steps:
- attaching (35) a potato peeling disc (7) having an abrasive structure on its surface (18) from above to the tool (9) which is located centrally at a bottom (15) of the food preparation vessel (2) to establish a manually releasable, rotationally coupled connection such that in operation the potato peeling disc (7) rotates at the same rotational speed (26) as the tool (9);
- adding potatoes into the food preparation vessel (2) from above onto the potato peeling disc (7);
- rotating the tool (9) in a motorized manner in a first direction of rotation (41) and peeling of the potatoes with the potato peeling disc (7) inside the food preparation vessel (2).

2. Method according to claim 1, **characterized by** the step:
- rotating the tool (9) in a motorized manner with the potato peeling disc (7) being attached in an opposite second direction of rotation (34).

3. Method according to the preceding claim, **characterized in that** multiple changes are made between the first direction of rotation (41) and the second direction of rotation (34), preferably at a regular interval.

4. Method according to one of the preceding claims, **characterized in that** the food processor (1) has a potato peeling mode and, upon activation of the potato peeling mode, the food processor (1) causes the tool (9) to be rotated at a predefined rotational speed (26) in the first direction of rotation (41).

5. Method according to one of the preceding claims, **characterized by** the steps:
- the food processor (1) determines a weight of the potatoes in the food preparation vessel (2);
- the food processor (1) determines a peeling time (47) depending on the determined weight, wherein the tool (9) is rotated in the first direction of rotation (41) for the peeling time (47).

6. Method according to one of the preceding claims, **characterized by** the steps:
- the food processor (1) obtains or determines a potato size of the potatoes in the food preparation vessel (2);
- the food processor (1) determines a peeling time (47) depending on the potato size, wherein the tool (9) is rotated in the first direction of rotation (41) for the peeling time (47).

7. Method according to the two preceding claims, **characterized in that** the peeling time (47) is determined depending on the weight and the potato size and the tool (9) is rotated in the first direction of rotation (41) for the peeling time (47).

8. Method according to one of the preceding claims, **characterized in that**
- the food processor is equipped with at least two predefined pairs of values (P1, P2), wherein the first pair of values (P1) comprises a first peeling time for a first weight and/or for a first potato size, and the second pair of values (P2) comprises a second peeling time for a second weight and/or for a second potato size, and
- the food processor (1) determines the peeling time (47) in the first direction of rotation (41) by linear interpolation on the basis of the two predefined pairs of values (P1, P2).

9. Method according to claim 1 or 2, **characterized by** the following steps:
- a control device (10) accesses at least one value corresponding to a weight and/or a potato size of the potatoes in the food preparation vessel (2);
- the control device (10) accesses a plurality of predefined pairs of values (P1, P2, P1', P2') indicating a peeling time (47) for specific values of the weight, the potato size and/or the rotational speed (26);
- the control device (10) receives a user input for the rotational speed (26) in the first direction of rotation (41) or determines the rotational speed (26) based on the weight and/or the potato size;
- the control device (10) performs linear interpolation on the basis of on the predefined pairs of values (P1, P2, P1', P2') for the rotational speed (26) in the first direction of rotation (41) based on the weight and/or the potato size to determine the peeling time (47); and
- the control device (10) causes a drive (11) of the food processor (1) to rotate the tool (9) at the rotational speed (26) for the peeling time (47) in the first direction of rotation (41).

10. Method according to one of the preceding claims, **characterized in that** the rotational speed (26) for the first direction of rotation (41) is at least 450 rpm and/or at most 1200 rpm.

11. Method according to one of the preceding claims, **characterized in that** for peeling potatoes the tool (9) is rotated at about 500 rpm or about 800 rpm or about 1100 rpm in the first direction of rotation (41).

12. Method according to one of the preceding claims, **characterized in that** the motorized rotation of the tool (9) and with it the potato peeling disc (7) for peeling the potatoes by the potato peeling disc inside the food preparation vessel (2) is initially performed at a first speed for a first peeling time and subsequently the tool (9) and with it the potato peeling disc (7) for peeling the potatoes within the food preparation vessel (2) is rotated in a motorized manner at a second speed for a second peeling time, wherein the second speed differs from the first speed, in particular is lower than the first speed.

13. Food processor (1) for performing the method according to one of the preceding claims, wherein the food processor (1) comprises for food preparation a removable food preparation vessel (2), a heating element (6) for heating a food (20) in the food preparation vessel (2), a rotatable tool (9) for mixing or chopping the food (20) in the food preparation vessel (2), which is located centrally at a bottom (15) of the food preparation vessel (2), and a potato peeling disc (7) having an abrasive structure on its surface (18), wherein the potato peeling disc (7) is attached to the tool from above (9) such that the potato peeling disc (7) is manually releasable and rotationally coupled to the tool (9) so that in operation potatoes can be added to the food preparation vessel (2) from above onto the potato peeling disc (7) and the potato peeling disc (7) rotates at the same rotational speed (26) as the tool (9) when the tool (9) is rotated in a motorized manner in a first direction of rotation (41) for peeling the potatoes with the potato peeling disc (7) inside the food preparation vessel (2).

14. Food processor (1) according to the preceding claim, **characterized in that** the food processor (1) comprises an integrated weight sensor (8) for determining a weight of the potatoes to be peeled located in the food preparation vessel (2), and a control device (10) is configured such that a peeling time (47) for the first direction of rotation (41) is determined depending on the weight.

15. Food processor (1) according to one of the two preceding claims, **characterized in that** the abrasive structure on the surface (18) of the potato peeling disc (7) is a structure with a geometrically undefined cutting edge, in particular produced by an abrasive means.

16. Food processor (1) according to one of the two preceding claims, **characterized in that** the abrasive structure on the surface (18) of the potato peeling disc (7) is a structure with a geometrically defined cutting edge, in particular projections each having an area of at least 5 mm² and/or at most 20 mm².

## Revendications

1. Procédé pour éplucher des pommes de terre avec un robot de cuisine (1) qui comprend, pour la préparation des aliments, un récipient de préparation d'aliments (2) amovible, un élément chauffant (6) pour chauffer un aliment (20) dans le récipient de préparation d'aliments (2) et un outil rotatif (9) pour mélanger ou broyer l'aliment (20) dans le récipient de préparation d'aliments (2), avec les étapes suivantes :
- emboîter (35) un disque d'épluchage de pommes de terre (7), qui a une structure abrasive sur sa surface (18), par le haut sur l'outil (9), qui se trouve au centre sur un fond (15) du récipient de préparation d'aliments (2), pour établir une liaison couplée en rotation, amovible manuellement, de sorte qu'en fonctionnement, le disque d'épluchage de pommes de terre (7) tourne à la même vitesse de rotation (26) que l'outil (9) ;
- ajouter des pommes de terre dans le récipient de préparation des aliments (2) par le haut sur le disque d'épluchage de pommes de terre (7) ;
- tournage motorisé de l'outil (9) dans un premier sens de rotation (41) et éplucher des pommes de terre avec le disque d'épluchage de pommes de terre (7) à l'intérieur du récipient de préparation d'aliments (2).

2. Procédé selon la revendication 1, **caractérisé par** l'étape consistant à :
- tournage motorisé de l'outil (9) avec le disque d'épluchage de pommes de terre (7) emboîté sur celui-ci dans un deuxième sens de rotation (34) opposé.

3. Procédé selon la revendication précédente, **caractérisé en ce que** l'on alterne plusieurs fois entre le premier sens de rotation (41) et le deuxième sens de rotation (34), de préférence à un intervalle régulier.

4. Procédé selon l'une des revendications précédentes, **caractérisé en ce que** le robot ménager (1) comporte un mode d'épluchage de pommes de terre et, lorsque le mode d'épluchage de pommes de terre est activé, le robot ménager (1) fait tourner l'outil (9) dans le premier sens de rotation (41) à une vitesse de rotation prédéfinie (26).

5. Procédé selon l'une des revendications précédentes, **caractérisé par** les étapes :
- le robot de cuisine (1) détermine un poids de pommes de terre dans le récipient de préparation d'aliments (2) ;
- le robot de cuisine (1) détermine une durée d'épluchage (47) en fonction du poids déterminé, où l'outil (9) est tourné dans le premier sens de rotation (41) pour la durée d'épluchage (47).

6. Procédé selon l'une des revendications précédentes, **caractérisé par** les étapes :
- le robot de cuisine (1) obtient ou détermine une taille de pomme de terre des pommes de terre dans le récipient de préparation d'aliments (2) ;
- le robot de cuisine (1) détermine une durée d'épluchage (47) en fonction de la taille de pommes de terre, où l'outil (9) est tourné dans le premier sens de rotation (41) pour la durée d'épluchage (47).

7. Procédé selon les deux revendications précédentes, **caractérisé en ce que** la durée d'épluchage (47) est déterminée en fonction du poids et de la taille de pommes de terre, et l'outil (9) est tourné dans le premier sens de rotation (41) pour la durée d'épluchage (47).

8. Procédé selon l'une des revendications précédentes, **caractérisé en ce que**
- le robot de cuisine dispose d'au moins deux paires de valeurs prédéfinies (P1, P2), où la première paire de valeurs (P1) comprend une première durée d'épluchage pour un premier poids et/ou pour une première taille de pomme de terre, et la deuxième paire de valeurs (P2) comprend une deuxième durée d'épluchage pour un deuxième poids et/ou pour une deuxième taille de pomme de terre, et
- le robot de cuisine (1) détermine la durée d'épluchage (47) dans le premier sens de rotation (41) par interpolation linéaire sur la base des deux paires de valeurs prédéfinies (P1, P2).

9. Procédé selon la revendication 1 ou 2, **caractérisé par** les étapes suivantes :
- un dispositif de commande (10) accède à au moins une valeur qui correspond à un poids et/ou à une taille de pommes de terre des pommes de terre dans le récipient de préparation d'aliments (2) ;
- le dispositif de commande (10) accède à plusieurs paires de valeurs prédéfinies (P1, P2, P1', P2') qui indiquent une durée d'épluchage (47) pour des valeurs spéciales du poids, de la taille de pommes de terre et/ou de la vitesse de rotation (26) ;
- le dispositif de commande (10) reçoit une entrée utilisateur pour la vitesse de rotation (26) dans le premier sens de rotation (41) ou détermine la vitesse de rotation (26) à l'aide du poids et/ou de la taille de pommes de terre ;
- le dispositif de commande (10) effectue, à l'aide du poids et/ou de la taille de pomme de terre, une interpolation linéaire sur la base des paires de valeurs prédéfinies (P1, P2, P1', P2') pour la vitesse de rotation (26) dans le premier sens de rotation (41), pour déterminer la durée d'épluchage (47) ; et
- le dispositif de commande (10) cause un entraînement (11) du robot de cuisine (1) à faire tourner l'outil (9) à la vitesse de rotation (26) pour la durée d'épluchage (47) dans le premier sens de rotation (41).

10. Procédé selon l'une des revendications précédentes, **caractérisé en ce que** la vitesse de rotation (26) pour le premier sens de rotation (41) est d'au moins 450 tr/min et/ou d'au plus 1200 tr/min.

11. Procédé selon l'une des revendications précédentes, **caractérisé en ce que**, pour éplucher des pommes de terre, l'outil (9) est mis en rotation dans le premier sens de rotation (41) à environ 500 tr/min ou environ 800 tr/min ou environ 1100 tr/min.

12. Procédé selon l'une des revendications précédentes, **caractérisé en ce que** le tournage motorisé de l'outil (9) et donc du disque d'épluchage de pommes de terre (7) pour éplucher les pommes de terre par le disque d'épluchage de pommes de terre à l'intérieur du récipient de préparation d'aliments (2) se fait d'abord à une première vitesse de rotation pour une première durée d'épluchage, et ensuite, l'outil (9) et donc le disque d'épluchage de pommes de terre (7) pour éplucher les pommes de terre à l'intérieur du récipient de préparation d'aliments (2) est tourné de manière motorisée à une deuxième vitesse de rotation pour une deuxième durée d'épluchage, où la deuxième vitesse de rotation est différente de la première vitesse de rotation, en particulier inférieure à la première vitesse de rotation.

13. Robot de cuisine (1) pour effectuer le procédé selon l'une des revendications précédentes, dans lequel le robot de cuisine (1) pour la préparation d'aliments comprend un récipient de préparation d'aliments (2) amovible, un élément chauffant (6) pour chauffer un aliment (20) dans le récipient de préparation d'aliments (2), un outil rotatif (9) pour mélanger ou broyer l'aliment (20) dans le récipient de préparation d'aliments (2), qui se situe au centre d'un fond (15) du récipient de préparation d'aliments (2), et un disque d'épluchage de pommes de terre (7) avec une structure abrasive sur sa surface (18), dans lequel le disque d'épluchage de pommes de terre (7) est emboîté par le haut sur l'outil (9), de telle sorte que le disque d'épluchage de pommes de terre (7) est lié à l'outil (9) de manière amovible manuellement et couplé en rotation, de sorte qu'en fonctionnement, des pommes de terre peuvent être ajoutées dans le récipient de préparation d'aliments (2) par le haut sur le disque d'épluchage de pommes de terre (7) et le disque d'épluchage de pommes de terre (7) tourne à la même vitesse de rotation (26) que l'outil (9) lorsque l'outil (9) est tourné de manière motorisée dans un premier sens de rotation (41) pour éplucher les pommes de terre avec le disque d'épluchage de pommes de terre (7) à l'intérieur du récipient de préparation d'aliments (2).

14. Robot de cuisine (1) selon la revendication précédente, **caractérisé en ce que** le robot de cuisine (1) comprend un capteur de poids intégré (8) pour déterminer un poids des pommes de terre à éplucher se trouvant dans le récipient de préparation d'aliments (2), et un dispositif de commande (10) est configuré de telle sorte qu'une durée d'épluchage (47) pour le premier sens de rotation (41) est déterminée en fonction du poids.

15. Robot de cuisine (1) selon l'une des deux revendications précédentes, **caractérisé en ce que** la structure abrasive sur la surface (18) du disque d'épluchage de pommes de terre (7) est une structure à coupe géométriquement indéterminée, notamment réalisée par un moyen abrasif.

16. Robot de cuisine (1) selon l'une des deux revendications précédentes, **caractérisé en ce que** la structure abrasive sur la surface (18) du disque d'épluchage de pommes de terre (7) est une structure à coupe géométriquement déterminée, notamment des protubérances chacune avec une surface d'au moins 5 mm² et/ou d'au plus 20 mm².
